(19) Europäisches Patentamt
European Patent Office
Office européen des brevets

(11) **EP 3 645 985 B1**

(12) **EUROPEAN PATENT SPECIFICATION**

(45) Date of publication and mention
of the grant of the patent:
**10.08.2022 Bulletin 2022/32**

(51) International Patent Classification (IPC):
**G01H 3/10** *(2006.01)*    G01H 3/12 *(2006.01)*

(21) Application number: **18747001.8**

(52) Cooperative Patent Classification (CPC):
**G01H 3/10;** G01H 3/005; G01H 3/12

(22) Date of filing: **26.06.2018**

(86) International application number:
**PCT/IB2018/054706**

(87) International publication number:
**WO 2019/003108 (03.01.2019 Gazette 2019/01)**

(54) **METHOD FOR MEASURING COMPLEX ACOUSTIC INTENSITY WITH THREE-DIMENSIONAL RADIATIVE AND OSCILLATORY SPECTRAL RESOLUTION**

VERFAHREN ZUR MESSUNG DER KOMPLEXEN AKUSTISCHEN INTENSITÄT MIT DREIDIMENSIONALER STRAHLUNGS- UND OSZILLATORISCHER SPEKTRALER AUFLÖSUNG

PROCÉDÉ DE MESURE D'INTENSITÉ ACOUSTIQUE COMPLEXE À RÉSOLUTION SPECTRALE RAYONNANTE ET OSCILLATOIRE TRIDIMENSIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2017 IT 201700071335**

(43) Date of publication of application:
**06.05.2020 Bulletin 2020/19**

(73) Proprietors:
• **Consiglio Nazionale Delle Ricerche**
**00185 Roma (IT)**
• **Università Degli Studi Di Ferrara**
**44121 Ferrara (IT)**
• **Universidad Nacional de Chilecito**
**La Rioja (AR)**

(72) Inventors:
• **STANZIAL, Domenico**
**44121 Ferrara (IT)**
• **GRAFFIGNA, Carlos Esteban**
**44121 Ferrara (IT)**

(74) Representative: **IP Sextant s.r.l.**
**Via A. Salandra, n.18**
**00187 Rome (IT)**

(56) References cited:
• **LI ZHI ET AL: "Instrumentation for underwater acoustic intensity measurement", 2016 IEEE/OES CHINA OCEAN ACOUSTICS (COA), IEEE, 9 January 2016 (2016-01-09), pages 1-4, XP032938686, DOI: 10.1109/COA.2016.7535801**
• **JACOBSEN FINN ET AL: THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 118, no. 3, 1 January 2005 (2005-01-01), pages 1510-1517, XP012073293, ISSN: 0001-4966, DOI: 10.1121/1.1984860**
• **PRASAD M G ET AL: "A note on the relation between complex acoustic intensity and specific acoustic impedance", JOURNAL OF SOUND AND VIBRATION, ELSEVIER, AMSTERDAM, NL, vol. 118, no. 3, 8 November 1987 (1987-11-08), pages 549-554, XP024201397, ISSN: 0022-460X, DOI: 10.1016/0022-460X(87)90372-5 [retrieved on 1987-11-08]**
• **WENBO DUAN ET AL: "Measurement of complex acoustic intensity in an acoustic waveguide", THE JOURNAL OF THE ACOUSTICAL SOCIETY OF AMERICA, vol. 134, no. 5, 30 November 2013 (2013-11-30), pages 3674-3685, XP055458744, New York, NY, US ISSN: 0001-4966, DOI: 10.1121/1.4821214**

**Description**

The present invention refers to a method for measuring the spectra of the radiating and oscillating acoustic intensity in any operating condition, minimizing the experimental error. Such method is based on the analysis of the acoustic impedance and on the spectrum of the mean square velocity and on the spectrum of the mean square pressure of an acoustic particle, i.e. on the vibrations of the medium. The acoustic impedance is defined through the acoustic mass flow density the real part of which is related to the acoustic radiation (acoustic power per unit area) and hence to the acoustic absorption properties of the environment, while the imaginary one gives the spectrum of the three-dimensional oscillations of the energy due to the measurement environment own modes and proximity of the sound sources.

The present invention is directed to the spectral measurement of the active and reactive intensity of any type of sound source in different application areas such as for instance prevention and protection, environment, architecture, noise control, condition monitoring of machines and subsystems thereof, therapy, aeronautics and automotive, military and security, entertainment, robotics.

The main application of the acoustic intensity measurement currently concerns the analysis of the source sound power. Such application basically requires the measurement of the only "active" intensity, directly obtained as stationary mean of the product of the signals of the pressure and velocity of the acoustic particle, i.e. of the vibrations of the medium, acoustic pressure and acoustic velocity respectively. Current intensity meters measure the frequency distribution of the intensity starting from the simple cross-spectrum of pressure and velocity. However, the complexity of the hardware solutions for obtaining such signals, produced since the 80s of the 20th century using pressure-pressure (p-p) probes, and their high costs, actually hindered diffusion of intensimetry as technique of election not only in applied acoustics, but most of all in audio engineering and in audiometry applications. The undesired phase difference between the two pressure probes induces an error in the determination of the particle velocity. Also, since pressure is determined by the sum of the two pressure probes, there is an additional error the mean pressure, rather than the pressure in one single position, is measured. The errors in the measurements of particle pressure and velocity entail an error in the sound intensity.

In any case, around 2000, a renewed interest in the use of intensimetry occurred with the production and marketing of pressure-velocity (p-v) probes, which permitted to directly acquire from specific transducers, made with MEMS technology, the scalar pressure signal p and the three signals v composing the velocity vector. However, the phase error between the acoustic pressure sensor and the particle velocity sensor is usually much greater than the phase error produced in a p-p measuring instrument, and it will not be possible to correctly determine the sound intensity. Acoustic particle pressure and velocity sensors, as well as devices and methods for measuring the acoustic intensity described above, are disclosed for instance in documents US 4463453 A, WO9600488, WO9935470.

Further, the paper: Prasad M G; Ham S Y, (1987): "A note on the relation between complex acoustic intensity and specific acoustic impedance", JOURNAL OF SOUND AND VIBRATION, ELSEVIER, AMSTERDAM, NL, vol. 118, no. 3, pages 549-554; discloses a method for determining active acoustic intensity of at least one sound source based on determination of acoustic impedance and mean square velocity of an acoustic particle, which comprises : directly measuring time signal of an acoustic pressure and an acoustic velocity, computing frequency spectra of said signals, computing a first complex vector impedance and the power spectra of velocity components from said frequency spectra and computing a frequency distribution of a first active intensity based on the real part of said first complex vector impedance and the power spectra of velocity components.

In addition to technological difficulties, the history of acoustic intensimetry also experiences another far more crucial delay due to the uncertain physical interpretation and consequent metrological methodology of what is commonly called "reactive" intensity.
it is an object of the present invention to overcome the drawbacks described above, reliably allowing to precisely measure the complex acoustic intensity in any field generated by at least one sound source in any operating condition.

It is specific subject matter of the present invention a method for determining active and reactive acoustic intensity of at least one sound source based on determination of acoustic impedance and mean square velocity of an acoustic particle as defined by independent claim 1.

It is another specific subject matter of the present invention a method for determining active acoustic intensity and reactivity tensor of at least one sound source based on determination of acoustic impedance and mean square velocity of an acoustic particle as defined by independent claim 2.

Further embodiments of the method according to the invention are defined in the dependent claims.

It is still another specific subject matter of the present invention an apparatus for performing the method of the present invention as defined by independent claim 12.

A further embodiment of the apparatus according to the invention is defined in the dependent claim.

The advantages offered by the method according to the invention with respect to prior art solutions are numerous and significant.

The method of the present invention unequivocally links the active intensity spectrum to the acoustic resistance one and the reactive intensity one to the acoustic reactance one, acoustic resistance and reactance being respectively the real and imaginary parts of the acoustic impedance. In other words, the method allows to measure the radiating and oscillating intensity of the acoustic energy starting from determination of the acoustic impedance. Mediator between impedance and intensity is the mean square velocity spectrum that hence permits a physics interpretation of the acoustic impedance as acoustic mass flow density. The basic difference from current intensity meters consists in the experimental measurement of the impedance (well-known physical quantity) instead of computation of the pressure and velocity cross-spectrum as mere application of known theorems of signal analysis. This apparently useless complication introduced by the invention on the contrary permits to optimize the measurement process, minimizing the experimental error in several measurement situations.

The present invention will be now described, by way of illustration and not by way of limitation, according to its preferred embodiments, by particularly referring to the Figures of the annexed drawings, in which:

> Figure 1 is a schematic block diagram of the configuration used for measurements of the acoustic impedance of at least one sound source to determine the acoustic intensity of said at least one sound source according to the invention;
> Fig. 2 is a flow chart of the algorithm executed by a first preferred embodiment of the method for determining acoustic intensity of said at least one sound source according to the invention;
> Figure 3 schematically shows the Fourier transform block of the flow chart of Figure 1;
> Figure 4 shows in detail the calibration block of the flow chart of Figure 1;
> Figure 5 shows in detail the first block of impedance computation of the flow chart of Figure 1;
> Figure 6 shows in detail the second block of impedance computation of the flow chart of Figure 1;
> Figure 7 shows in detail the first and second mean blocks of the flow chart of Figure 1;
> Figure 8 is a flow chart of the algorithm executed by a second preferred embodiment of the method for determining acoustic intensity of said at least one sound source according to the invention;
> Figure 9 shows the first reactivity tensor (a) and the second reactivity tensor (b) and the second mean block (c) in the flow chart of Figure 8.

In the Figures, identical reference numerals will be used for alike elements. Also, thin lines refer to path lines in the flow charts and blocks of scalar elements, while thick lines refer to path lines in the flow charts and blocks of space vector elements.

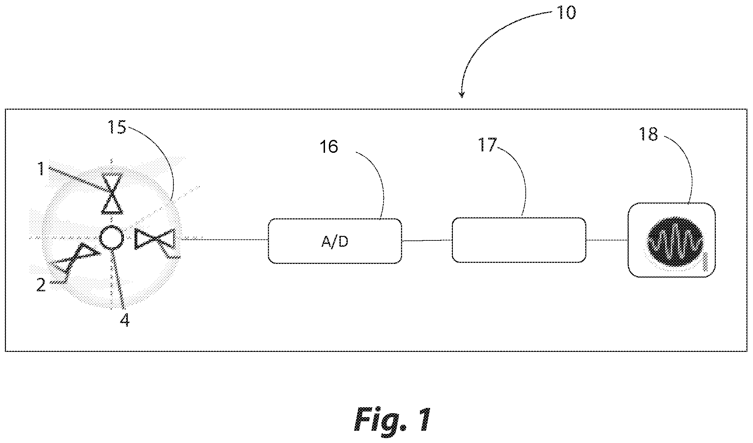

With reference to Fig. 1, to measure acoustic impedance a first preferred embodiment of an apparatus 10 according to the invention has a device 15 including a first velocimetry sensor 1 to directly detect an acoustic velocity along a x direction, a second velocimetry sensor 2 to directly detect an acoustic velocity along a y direction orthogonal to the x direction, a third velocimetry sensor 3 to directly detect an acoustic velocity along a z direction orthogonal to the x and y directions, to measure the components $(v_x(t), v_y(t), v_z(t))$ of an acoustic velocity $\bar{v}$ along the x, y and z directions as function of time t, and a first microphone sensor 4 to directly measure an acoustic pressure $p(t)$ as function of time t. The device 15 is coupled to an A/D converter 16, with at least four channels, which receives at the input the signals $p(t), v_x(t), v_y(t), v_z(t)$, and outputs the corresponding discretized values $p(n), v_x(n), v_y(n), v_z(n)$, where $n \in N$, which are processed by a processor 17 performing the method according to the invention for determining acoustic intensity and optionally showing spectra and processed quantities on one or more displays 18.

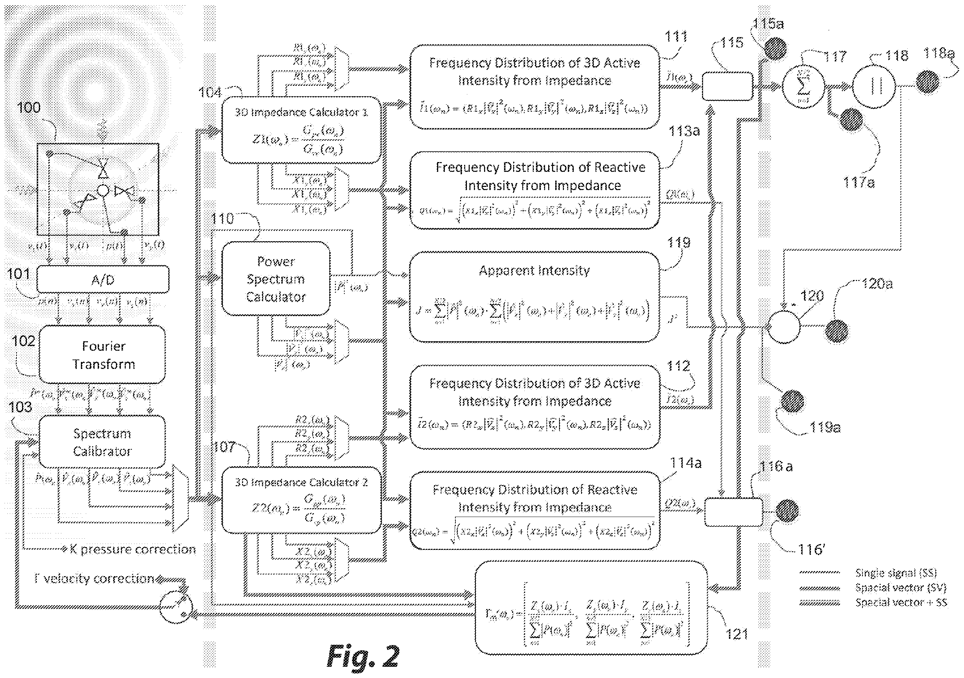

Fig. 2 shows the flow chart of a preferred embodiment of the method for determining acoustic intensity of at least one sound source. Advantageously, the method is automatically performed. In a step 100, an acoustic pressure $p(t)$ and an acoustic velocity $\bar{v}(t)$ according to its spatial components $(v_x(t), v_y(t), v_z(t))$ are directly measured as function of time and discretized in a step 101 for letting them be processed in step 102 to obtain the respective complex frequency spectra $\hat{P}^m(\omega_n), \left(\hat{V}_x^m(\omega_n), \hat{V}_y^m(\omega_n), \hat{V}_z^m(\omega_n)\right)$ where con is the discretized frequency with $n \in [1; N/2]$. The number N of spectral lines depends on the time resolution of the signal measurements of step 100. The superscript m indicates that they are the spectra of measured power and acoustic velocity signals, which will be called measured spectra in the following. The quantities $\hat{P}^m(\omega_n), \hat{V}_x^m(\omega_n), \hat{V}_y^m(\omega_n), \hat{V}_z^m(\omega_n)$ are complex quantities. The frequency spectra are obtained by Fast Fourier Transform (FFT) of the measured signals as function of time as follows:

$$\hat{P}^m(\omega_n)=FFT\big(p(n)\big)$$

$$\hat{V}_x^m(\omega_n)=FFT\big(v_x(n)\big)$$

$$\hat{V}_y^m(\omega_n)=FFT\big(v_y(n)\big)$$

$$\hat{V}_z^m(\omega_n)=FFT\big(v_z(n)\big)$$

[Eq.1]

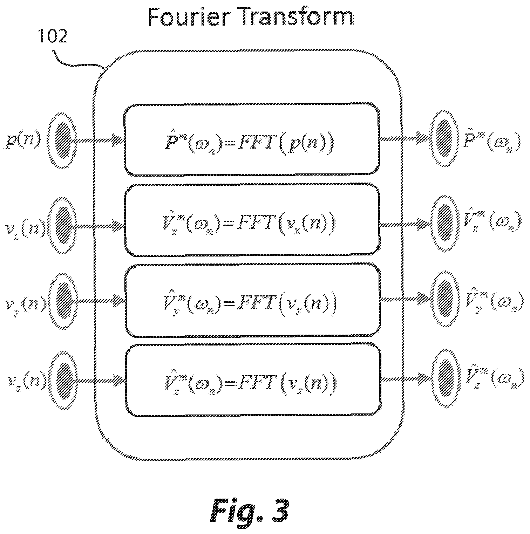

as shown in Fourier transform block of Fig. 3. In step 103, the measured frequency spectra of pressure and velocity are calibrated through suitable calibration functions K($\omega$), $\hat{\Gamma}(\omega) \equiv (\hat{\Gamma}_x(\omega), \hat{\Gamma}_y(\omega), \hat{\Gamma}_y(\omega))$ obtaining respective calibrated spectra, as follows:

$$\hat{P}(\omega)=K(\omega)\cdot\hat{P}^m(\omega)$$

$$\hat{V}_x(\omega)=\Gamma_x(\omega)\cdot K(\omega)\cdot\hat{V}_x^m(\omega)$$

$$\hat{V}_y(\omega)=\Gamma_y(\omega)\cdot K(\omega)\cdot\hat{V}_y^m(\omega)$$

$$\hat{V}_z(\omega)=\Gamma_z(\omega)\cdot K(\omega)\cdot\hat{V}_z^m(\omega)$$

[Eq.2]

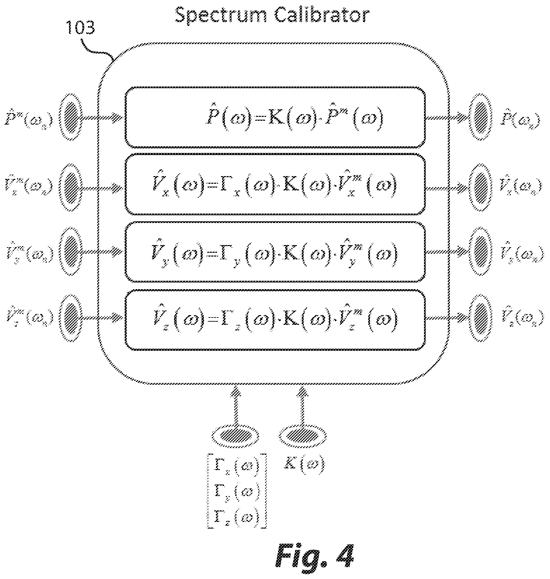

as shown in the calibration block of Fig. 4. The calibration functions K and $\hat{\Gamma}$ are obtained with methods known in literature, see for instance Stanzial D., Graffigna C. AND., Protocollo di calibrazione in ampiezza and step per probes pressure-velocity in un campo di riferimento a onde piane progressive, Associazione Italiana di Acustica, 44° Convegno Nazionale, Pavia, 7-9 giugno 2017 ISBN: 978-88-88942-54-4. In further embodiments of the present invention, calibration functions K and $\hat{\Gamma}$ are provided by manufacturers of velocimetry or microphone probes. The calibrated spectra at the output of step 103 are sent as input data to a step 104 to compute a first three-dimensional impedance Z1 and to a step 107 to compute a second three-dimensional impedance Z2. In step 104, a first three-dimensional impedance $\hat{Z}1(\omega_n)$, given by the ratio between the cross-spectrum $\hat{G}_{pv}(\omega_n)$ of the spectrum of the acoustic pressure p and of the spectrum of the acoustic velocity v, and the self-spectrum $\hat{G}_{vv}(\omega_n)$ of the acoustic velocity v, is computed:

$$Z1(\omega_n) = \frac{G_{pv}(\omega_n)}{G_{vv}(\omega_n)}$$

[Eq.3]

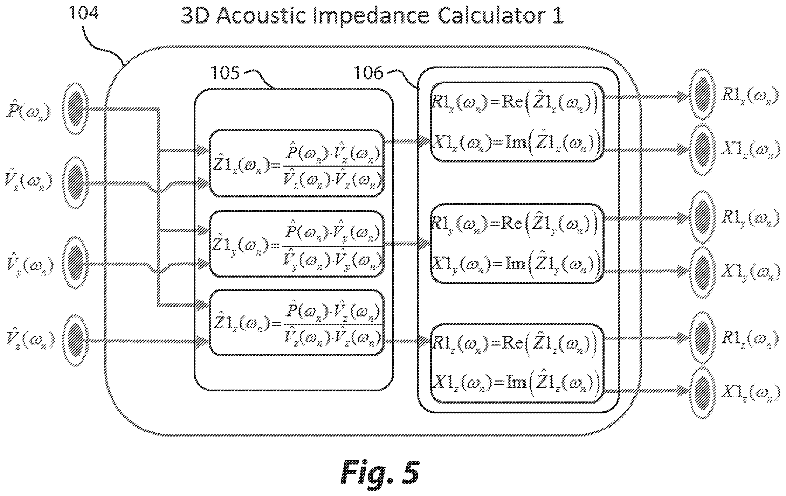

Step 104 outputs the real component R1($\omega$n) and imaginary component X1($\omega$n) of the first impedance in the three space directions. In particular, as shown in Fig. 5, in a substep 105 within the block representing step 104, the spatial components of the first impedance $(\hat{Z}1_x(\omega_n):, |\hat{Z}_y(\omega_n), |\hat{Z}1_z(\omega_n))$ are computed according to equations given below:

$$\hat{Z}1_x(\omega_n) = \frac{\hat{P}(\omega_n)\cdot\hat{V}_x(\omega_n)}{\hat{V}_x(\omega_n)\cdot\hat{V}_x(\omega_n)}$$

$$\hat{Z}1_y(\omega_n) = \frac{\hat{P}(\omega_n)\cdot\hat{V}_y(\omega_n)}{\hat{V}_y(\omega_n)\cdot\hat{V}_y(\omega_n)}$$

$$\hat{Z}1_z(\omega_n) = \frac{\hat{P}(\omega_n)\cdot\hat{V}_z(\omega_n)}{\hat{V}_z(\omega_n)\cdot\hat{V}_z(\omega_n)}$$

[Eq.4]

and in a subsequent substep 106 the real and imaginary components of the spatial components of the first impedance given by Eq. 4 are computed:

$$R1_x(\omega_n) = \mathrm{Re}\left(\hat{Z}1_x(\omega_n)\right)$$
$$X1_x(\omega_n) = \mathrm{Im}\left(\hat{Z}1_x(\omega_n)\right)$$

$$R1_y(\omega_n) = \mathrm{Re}\left(\hat{Z}1_y(\omega_n)\right)$$
$$X1_y(\omega_n) = \mathrm{Im}\left(\hat{Z}1_y(\omega_n)\right)$$

$$R1_z(\omega_n) = \mathrm{Re}\left(\hat{Z}1_z(\omega_n)\right)$$
$$X1_z(\omega_n) = \mathrm{Im}\left(\hat{Z}1_z(\omega_n)\right)$$

[Eq.5]

In step 107, a second three-dimensional impedance $\hat{Z}2(\omega_n)$ given by the ratio between the self-spectrum $G_{pp}(\omega_n)$ of the acoustic pressure p and the cross-spectrum $G_{vp}(\omega_n)$ of the spectrum of the acoustic velocity v and of the spectrum of the acoustic pressure p is computed:

$$Z2(\omega_n) = \frac{G_{pp}(\omega_n)}{G_{vp}(\omega_n)}$$

[Eq.6]

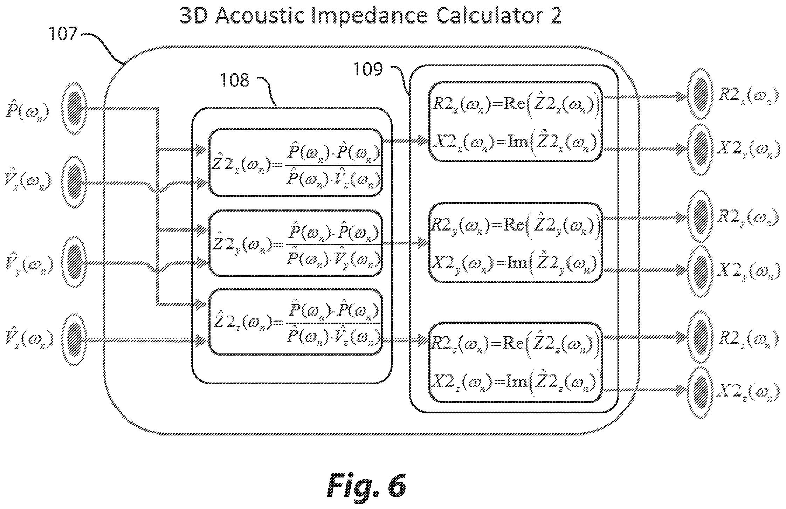

Similarly, to step 104, step 107 outputs the real component R2(ωn) and imaginary component X2(ωn) of the second impedance in the three space directions. In particular, as shown in Fig. 6, in a substep 108 within the block representing step 107, the spatial components of the second impedance $(\hat{Z}2_x(\omega_n):,\hat{Z}2_y(\omega_n):|\hat{Z}2_z(\omega_n):)$ are computed according to equations given below:

$$\hat{Z}2_x(\omega_n)=\frac{\hat{P}(\omega_n)\cdot\hat{P}(\omega_n)}{\hat{P}(\omega_n)\cdot\hat{V}_x(\omega_n)}$$

$$\hat{Z}2_y(\omega_n)=\frac{\hat{P}(\omega_n)\cdot\hat{P}(\omega_n)}{\hat{P}(\omega_n)\cdot\hat{V}_y(\omega_n)}$$

$$\hat{Z}2_z(\omega_n)=\frac{\hat{P}(\omega_n)\cdot\hat{P}(\omega_n)}{\hat{P}(\omega_n)\cdot\hat{V}_z(\omega_n)}$$

[Eq.7]

and in a subsequent substep 109 the real and imaginary components of the spatial components of the first impedance given by Eq. 7 are computed:

$$R2_x(\omega_n)=\mathrm{Re}\left(\hat{Z}2_x(\omega_n)\right)$$
$$X2_x(\omega_n)=\mathrm{Im}\left(\hat{Z}2_x(\omega_n)\right)$$

$$R2_y(\omega_n)=\mathrm{Re}\left(\hat{Z}2_y(\omega_n)\right)$$
$$X2_y(\omega_n)=\mathrm{Im}\left(\hat{Z}2_y(\omega_n)\right)$$

$$R2_z(\omega_n)=\mathrm{Re}\left(\hat{Z}2_z(\omega_n)\right)$$
$$X2_z(\omega_n)=\mathrm{Im}\left(\hat{Z}2_z(\omega_n)\right)$$

[Eq.8]

The pressure and velocity calibrated spectra output by step 103 are further sent to a step 110 to compute the power spectra of the velocity components:

$$\left|\widehat{V}_x\right|^2(\omega_n) = \widehat{V}_x\,\widehat{V}_x^*$$

$$\left|\widehat{V}_y\right|^2(\omega_n) = \widehat{V}_y\,\widehat{V}_y^*$$

$$\left|\widehat{V}_z\right|^2(\omega_n) = \widehat{V}_z\,\widehat{V}_z^* \qquad \text{Eq. 9}$$

where $\widehat{V}_x^*$, $\widehat{V}_y^*$, $\widehat{V}_z^*$ are the complex conjugate spectra of the velocity components $\hat{V}_x, \hat{V}_y, \hat{V}_z$.

In the first preferred embodiment of the invention, the pressure calibrated spectrum output by step 103 is sent to step 110 to further compute the pressure power spectrum:

$$\left|\hat{P}\right|^2(\omega_n) = \hat{P}\hat{P}^* \qquad \text{Eq. 9a}$$

where $\hat{P}^*$ is the complex conjugate spectrum of pressure $\hat{P}$.

Further embodiments of the method may omit computation of the pressure power spectrum.

Thus, the intensity measurement directly occurs in the frequency domain by simply multiplying the impedance complex spectrum with the respective power spectra of the velocity components.

The real components of the first impedance $\hat{Z}1(\omega_n)$ output by step 104 and the power spectra of the velocity components output by step 110 are processed in a step 111 to compute a frequency distribution of a first three-dimensional active intensity $\overline{I}1(\omega_n)$ by multiplying the real components of the first impedance with the power of the velocity components:

$$\vec{I}1(\omega_n) = \left(R1_x\left|\hat{V_x}\right|^2(\omega_n), R1_y\left|\hat{V_y}\right|^2(\omega_n), R1_z\left|\hat{V_z}\right|^2(\omega_n)\right) \qquad \text{Eq. 10}$$

Similarly, the real components of the second impedance $\hat{Z}2(\omega_n)$ output by step 107 and the power spectra of the velocity components output by step 110 are processed in a step 112 to compute a frequency distribution of a second three-dimensional active intensity $\overline{I}2(\omega_n)$ by multiplying the real components of the second impedance with the power of the velocity components:

$$\vec{I}2(\omega_n) = \left(R2_x\left|\hat{V_x}\right|^2(\omega_n), R2_y\left|\hat{V_y}\right|^2(\omega_n), R2_z\left|\hat{V_z}\right|^2(\omega_n)\right) \qquad \text{Eq. 11}$$

The imaginary components of the first impedance $\hat{Z}1(\omega_n)$ output by step 104 and the power spectra of the velocity components output by step 110 are processed in a step 113a to compute the frequency distribution of a first reactive intensity $Q1(\omega_n)$ by multiplying the imaginary components of the first impedance with the power of the velocity components:

$$Q1(\omega_n) = \sqrt{\left(X1_x\left|\hat{V_x}\right|^2(\omega_n)\right)^2 + \left(X1_y\left|\hat{V_y}\right|^2(\omega_n)\right)^2 + \left(X1_z\left|\hat{V_z}\right|^2(\omega_n)\right)^2} \qquad \text{Eq. 12}$$

Similarly, the imaginary components of the second impedance $\hat{Z}2(\omega_n)$ output by step 104 and the power spectra of the velocity components output by step 110 are processed in a step 114a to compute the frequency distribution of a second reactive intensity $Q2(\omega_n)$ by multiplying the imaginary components of the second impedance with the power of the velocity components:

$$Q2(\omega_n) = \sqrt{\left(X2_x\left|\hat{V_x}\right|^2(\omega_n)\right)^2 + \left(X2_y\left|\hat{V_z}\right|^2(\omega_n)\right)^2 + \left(X2_z\left|\hat{V_z}\right|^2(\omega_n)\right)^2} \qquad \text{Eq. 13}$$

In the first preferred embodiment of the invention, the power spectra of the velocity components and of pressure output by step 110 are processed in a step 119 to compute the frequency distribution of an apparent intensity $J(\omega)$, according to equation:

$$J = \sum_{n=1}^{N/2}\left|\hat{P}\right|^2(\omega_n) \cdot \sum_{n=1}^{N/2}\left(\left|\hat{V_x}\right|^2(\omega_n) + \left|\hat{V_y}\right|^2(\omega_n) + \left|\hat{V_z}\right|^2(\omega_n)\right) \qquad \text{Eq. 14}$$

Optionally, in a further step 119a, the spectrum of the apparent intensity $J(\omega)$, given by Eq. 14 is displayed on a display. Further embodiments of the method may omit computation of the apparent intensity spectrum.

7

The thus obtained two spectral forms $\vec{I}1(\omega_n)$ and $\overline{\vec{I}2(\omega_n)}$ of the active intensity and $Q1(\omega_n)$ and $Q2(\omega_n)$ of the reactive intensity are then averaged to minimize the experimental error due to impedance evaluation and displayed as output in function of frequency with related uncertainties.

In fact, in step 115, the first and second active intensities, coming from steps 111 and 112 respectively, are entered as input data and are processed to compute a mean value $\overline{I}(\omega_n)$ thereof and a first relative uncertainty $\varepsilon_i(\omega_n)$:, with i=(x, y, z), according to equations:

$$\overline{I}(\omega_n) = \frac{\overline{I1}(\omega_n) + \overline{I}2(\omega_n)}{2} \qquad \text{Eq. 15}$$

$$\varepsilon_i(\omega_n) = \frac{\left| I1_i(\omega_n) - I2_i(\omega_n) \right|}{I_i(\omega_n)} \qquad \text{Eq. 16}$$

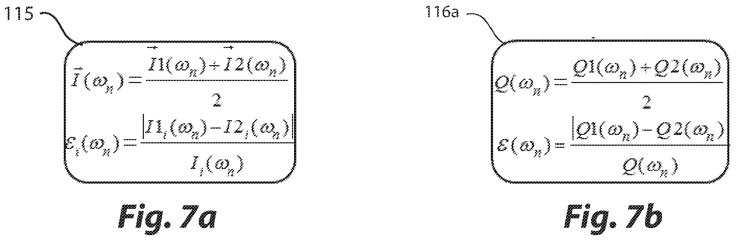

as shown in Fig. 7a. In the first preferred embodiment, in a further step 115a, the spectra of spatial components of the active intensity $\overline{I}(\omega_n)$ given by Eq. 15 are displayed on a display, optionally with the components of the first relative uncertainty $\varepsilon_i(\omega_n)$: given by Eq. 16.

In step 116a the first and second reactive intensities, output by steps 113a and 114a respectively, are entered as input data and are processed to compute a mean value $Q(\omega_n)$ thereof and a second relative uncertainty $\varepsilon_a(\omega_n)$:, according to equations:

$$\text{Eq. 17}$$

$$Q(\omega_n) = \frac{Q1(\omega_n) + Q2(\omega_n)}{2}$$

$$\varepsilon_a(\omega_n) = \frac{\left| Q1(\omega_n) - Q2(\omega_n) \right|}{Q(\omega_n)}$$

$$\text{Eq. 18}$$

as shown in Fig. 7b.

In the first preferred embodiment, in a further step 116', the spectrum of the reactive intensity $Q(\omega_n)$ given by Eq. 17 is displayed on a display, optionally with the second relative uncertainty $\varepsilon_a(\omega_n)$ given by Eq. 18.

Moreover, in the first preferred embodiment of the method according to the invention, the values of the active intensity $I$ and of the reactive intensity $Q$ are computed over the whole measured frequency band. The first one is simply obtained as modulus of the sum of the spectral components distributed over the whole band, while the second one (being related to a statistical moment of the second order - thus with zero mean) is obtained as difference of the apparent intensity and the active one. In particular, the spectral components of the active intensity $\overline{I}(\omega_n)$ output by step 115 are summed up in a step 117 over all frequencies $\omega$ n obtaining the active intensity vector $\vec{I}$ over the whole measured frequency band according to equation:

$$\vec{I} = \sum_{n=1}^{N/2} \vec{I}(\omega_n) \qquad \text{Eq. 19}$$

and in a subsequent step 118 the norm of such vector, $|\vec{I}|$, is computed obtaining the value of the active intensity $I$. Optionally, the values of the components of the vector $\vec{I}$ and of its norm $|\vec{I}|$ are shown as output on a display in steps 117a and 118a. The value of the active intensity $I$ output by step 118 and the value of the apparent intensity $J$ output by step 119 are processed in step 120 to compute the reactive intensity $Q$ over the whole measured frequency band according to equation:

$$Q = \sqrt{J^2 - I^2} \qquad \text{eq. 20}$$

Optionally, the value of the reactive intensity $Q$ is displayed as output on a display in step 120a.

Further embodiments of the method may omit computation of the active intensity I and reactive intensity Q.

It should be noted that in all steps of the method starting from the computation of the impedances and power spectra, the time average operator is not used but it is in any case implicit in the initial process of Fourier transform of the acquired pressure and velocity signals, which can be thus precisely calibrated in advance in the frequency domain.

In the first preferred embodiment, the method includes a self-calibration algorithm, whereby once the spectra of the components x, y, z of the first impedance $Z1(\omega)$ are obtained from step 104 (or the spectra of the second impedance $Z2(\omega)$ are obtained from step 107), the pressure power spectrum is obtained from step 110, and the spectra of the components of the active intensity $\overline{I}(\omega_n)$ are obtained from step 115, a new function $\hat{\Gamma}m(\omega_n)$ of calibration of the measured velocity $\left( \hat{V}_x^m(\omega_n), \quad \hat{V}_y^m(\omega_n), \quad \hat{V}_z^m(\omega_n) \right)$ is computed in a step 121, according to the set of equations:

$$\Gamma_m'(\omega_n) = \left[ \frac{Z_x(\omega_n) \cdot \vec{I}_x}{\sum\limits_{n=1}^{N/2} |P(\omega_n)|^2}, \quad \frac{Z_y(\omega_n) \cdot \vec{I}_y}{\sum\limits_{n=1}^{N/2} |P(\omega_n)|^2}, \quad \frac{Z_z(\omega_n) \cdot \vec{I}_z}{\sum\limits_{n=1}^{N/2} |P(\omega_n)|^2} \right] \qquad \text{Eq. 21}$$

where m is the number of iterations of the algorithm, and the method is repeated from calibrating step 103 until the active intensity converges.

In an embodiment of the present invention, the function $\hat{\Gamma}m(\omega_n)$ output by step 121 is used to perform the method again from the calibrating step 103 up to the computation of the reactive intensity $Q_m(\omega)$ and of the active intensity and $\vec{I}_m(\omega_n)$ respectively, optionally up to the computation of the values of the reactive intensity $Q_m$ and of the active intensity $I_m$ over the whole measured frequency band respectively, with m equal to the number of iterations for which the method has been performed. In a step 122 (not shown in the Figures) the components of a residual indicator, $L_{m,m-1}$, indicating the difference between the spectra of the active intensity $\vec{I}_m(\omega_n)$ with the spectra of the active intensity $\vec{I}_{m-1}(\omega_n)$ obtained from the preceding iteration, i.e. $L_{m,m-1} = L_{m,m-1}(\vec{I}_m(\omega_n), \vec{I}_{m-1}(\omega_n))$ are computed. Optionally, the residual indicator may indicate the difference between the active intensity $I_m$ over the whole measured frequency band and the active intensity $I_{m-1}$ over the whole measured frequency band obtained from the preceding iteration, i.e. $L_{m,m-1} = L_{m,m-1}(I_m, I_{m-1})$, being still more optionally equal to the modulus of the difference between such intensities, i.e. $L_{m,m-1} = |I_m - I_{m-1}|$. In a subsequent step 123 (not shown in the Figures), it is checked whether the residual indicator $L_{m,m-1}$ is larger than a predetermined threshold $\delta$, that in the case of residual indicator function of the spectral intensities has three components ($\delta_x$, $\delta_y$, $\delta_z$). If the residual indicator $L_{m,m-1}$ is larger than the predetermined threshold $\delta$, a new function $\hat{\Gamma}_{m+1}(\omega_n)$ is computed in step 121 and the method is performed again starting from calibrating step 103. Alternatively, if the residual indicator $L_{m,m-1}$ is lower than or equal to the predetermined threshold $\delta$, the method terminates and the values of the active and reactive intensities, namely the spectral ones and over the whole frequency band, obtained with the method are those output by the m-th iteration of the method. Further embodiments may omit this self-calibration algorithm.

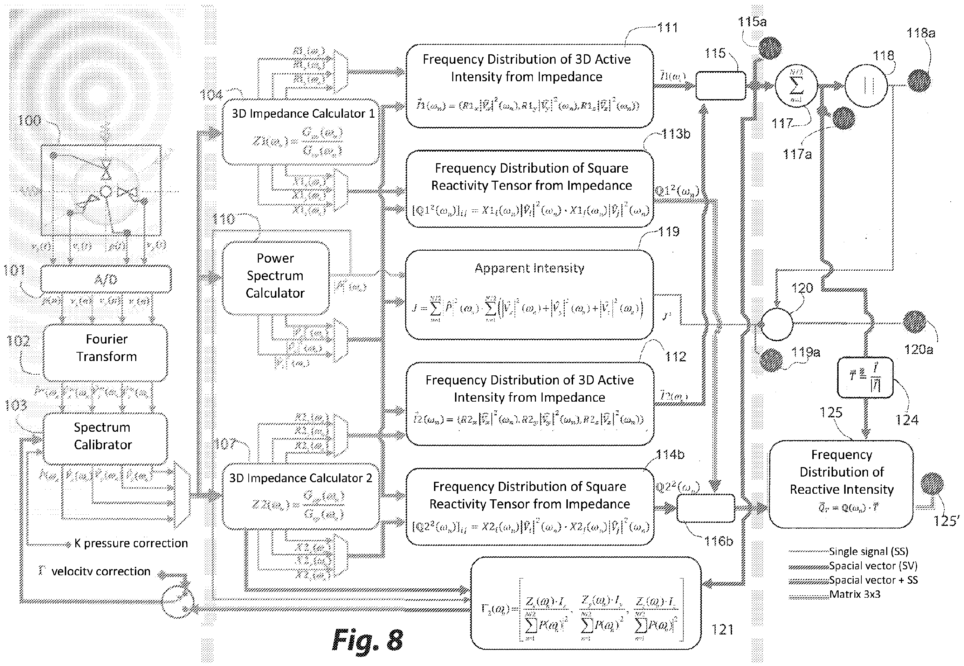

Fig. 8 shows the flow chart of a second preferred embodiment of the method for determining acoustic intensity of at least one sound source according to the invention. Advantageously, the method is automatically performed. Such second preferred embodiment differs from the first preferred embodiment shown in Figures 2-7 in that it computes the frequency distributions of the components of a first square reactivity tensor $\mathbb{Q}1^2(\omega n)$ and of a second square reactivity tensor $\mathbb{Q}2^2(\omega n)$ instead of computing the frequency distributions of first and second reactive intensities $Q1(\omega_n)$, $Q2(\omega_n)$ from the first and second impedances $\hat{Z}1(\omega), \hat{Z}2(\omega)$ respectively.

In particular, the imaginary components of the first impedance $\hat{Z}1(\omega_n)$ output by step 104 and the power spectra of the velocity components output by step 110 are processed in a step 113b to compute the frequency distribution of

the components $[\mathbb{Q}1^2(\omega n)]_{ij}$ , with i=(x, y, z), and j=(x, y, z), of a first square reactivity tensor $\mathbb{Q}1^2(\omega n)$ , by multiplying the imaginary components of the first impedance with the power of the velocity components:

$$[\mathbb{Q}1^2(\omega n)]_{ij} = X1_i(\omega)|\hat{V}_i|^2(\omega) \cdot X1_j(\omega)|\hat{V}_j|^2(\omega) \qquad \text{Eq. 22}$$

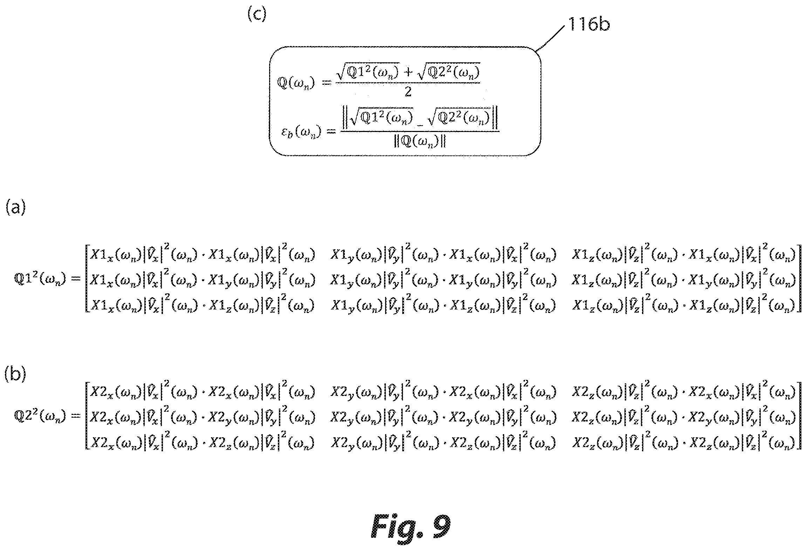

thus obtaining the first square tensor $\mathbb{Q}1^2(\omega_n)$ , also shown in Figure 9a, as the following 3x3 matrix:

$$\mathbb{Q}1^2(\omega_n) =$$
$$= \begin{bmatrix} X1_x(\omega_n)|\hat{V}_x|^2(\omega_n) \cdot X1_x(\omega_n)|\hat{V}_x|^2(\omega_n) & X1_y(\omega_n)|\hat{V}_y|^2(\omega_n) \cdot X1_x(\omega_n)|\hat{V}_x|^2(\omega_n) & X1_z(\omega_n)|\hat{V}_z|^2(\omega_n) \cdot X1_x(\omega_n)|\hat{V}_x|^2(\omega_n) \\ X1_x(\omega_n)|\hat{V}_x|^2(\omega_n) \cdot X1_y(\omega_n)|\hat{V}_y|^2(\omega_n) & X1_y(\omega_n)|\hat{V}_y|^2(\omega_n) \cdot X1_y(\omega_n)|\hat{V}_y|^2(\omega_n) & X1_z(\omega_n)|\hat{V}_z|^2(\omega_n) \cdot X1_y(\omega_n)|\hat{V}_y|^2(\omega_n) \\ X1_x(\omega_n)|\hat{V}_x|^2(\omega_n) \cdot X1_z(\omega_n)|\hat{V}_z|^2(\omega_n) & X1_y(\omega_n)|\hat{V}_y|^2(\omega_n) \cdot X1_z(\omega_n)|\hat{V}_z|^2(\omega_n) & X1_z(\omega_n)|\hat{V}_z|^2(\omega_n) \cdot X1_z(\omega_n)|\hat{V}_z|^2(\omega_n) \end{bmatrix}$$

Similarly, the imaginary components of the second impedance $\hat{Z}2(\omega_n)$ output by step 104 and the power spectra of the velocity components output by step 110 are processed in a step 114b to compute the frequency distribution of the components $[\mathbb{Q}2^2(\omega n)]_{ij}$ , with i=(x, y, z), and j=(x, y, z), of a second square reactivity tensor $\mathbb{Q}2^2(\omega n)$ , by multiplying the imaginary components of the second impedance with the power of the velocity components:

$$[\mathbb{Q}2^2(\omega n)]_{ij} = X2_i(\omega)|\hat{V}_i|^2(\omega) \cdot X2_j(\omega)|\hat{V}_j|^2(\omega) \qquad \text{Eq. 23}$$

thus obtaining the second square tensor $\mathbb{Q}2^2(\omega_n)$ , also shown in Figure 9b, as the following 3x3 matrix:

$$\mathbb{Q}2^2(\omega n) =$$
$$= \begin{bmatrix} X2_x(\omega)|\hat{V}_x|^2(\omega) \cdot X2_x(\omega)|\hat{V}_x|^2(\omega) & X2_y(\omega)|\hat{V}_y|^2(\omega) \cdot X2_x(\omega)|\hat{V}_x|^2(\omega) & X2_z(\omega)|\hat{V}_z|^2(\omega) \cdot X2_x(\omega)|\hat{V}_x|^2(\omega) \\ X2_x(\omega)|\hat{V}_x|^2(\omega) \cdot X2_y(\omega)|\hat{V}_y|^2(\omega) & X2_y(\omega)|\hat{V}_y|^2(\omega) \cdot X2_y(\omega)|\hat{V}_y|^2(\omega) & X2_z(\omega)|\hat{V}_z|^2(\omega) \cdot X2_y(\omega)|\hat{V}_y|^2(\omega) \\ X2_x(\omega)|\hat{V}_x|^2(\omega) \cdot X2_z(\omega)|\hat{V}_z|^2(\omega) & X2_y(\omega)|\hat{V}_y|^2(\omega) \cdot X2_z(\omega)|\hat{V}_z|^2(\omega) & X2_z(\omega)|\hat{V}_z|^2(\omega) \cdot X2_z(\omega)|\hat{V}_z|^2(\omega) \end{bmatrix}$$

Since the second preferred embodiment computes square reactivity tensors $\mathbb{Q}1^2(\omega n)$ , $\mathbb{Q}2^2(\omega n)$ instead of the reactive intensities as computed in the first embodiment, such second preferred embodiment also differs from the first preferred embodiment in that it computes a mean reactivity tensor $\mathbb{Q}(\omega n)$ with a third relative uncertainty $\varepsilon_b(\omega_n)$ according to equations shown in Figure 9c. In particular, in step 116b the first and second reactivity tensors, output by steps 113b and 114b respectively, are entered as input data and are processed to compute a mean value thereof corresponding to the mean reactivity tensor $\mathbb{Q}(\omega n)$ and a third relative uncertainty $\varepsilon_b$ according to equations:

$$\mathbb{Q}(\omega n) = \frac{\sqrt{\mathbb{Q}1^2(\omega n)} + \sqrt{\mathbb{Q}2^2(\omega n)}}{2} \qquad \text{Eq. 24}$$

$$\varepsilon_b(\omega n) = \frac{\left\|\sqrt{\mathbb{Q}1^2(\omega n)} - \sqrt{\mathbb{Q}2^2(\omega n)}\right\|}{\|\mathbb{Q}(\omega n)\|} \qquad \text{Eq. 25}$$

where the symbol || || indicates the norm operation.

The knowledge of the mean reactivity tensor $\mathbb{Q}(\omega n)$ permits to detail the intensimetry maps of a sound source, and thus to evaluate the effect of reactivity in any desired direction.

Usually, information of interest is the effect of reactivity in the same direction of the active intensity $\vec{I}$, that is the direction where acoustic energy of the sound source moves to. In view of this, the second preferred embodiment of the method also comprises a step 125 of computing the frequency distribution of a reactive intensity vector $\vec{Q}_T(\omega_n)$ having the same direction of the active intensity $\vec{I}$. In particular, such reactive intensity vector $\vec{Q}_T(\omega_n)$ is the projection of the mean reactivity tensor $Q(\omega n)$ in the direction $\vec{T} = \dfrac{\vec{I}}{|\vec{I}|}$ of the active intensity $\vec{I}$ according to equation:

$$\vec{Q}_T = \mathbb{Q}(\omega n) \cdot \vec{T}, \qquad \text{Eq. 26}$$

the direction $\vec{T}$ of the active intensity $\vec{I}$ having been computed in a step 124 after step 117 of computing the active intensity $\vec{I}$. It should be noted that $\vec{T}$ is the tangent vector to the trajectory of the acoustic energy. Further embodiments of the method may omit to compute such reactive intensity vector $\overline{Q}_T(\omega_n)$. Optionally, in a further step 125', the spectrum of the reactive intensity vector $\overline{Q}_T(\omega_n)$, given by Eq. 26 is displayed on a display. Further embodiments of the method may omit to compute the spectrum of the apparent intensity.

The preferred embodiments of this invention have been described, but it should be understood that those skilled in the art can make other variations and changes without so departing from the scope of protection thereof, as defined by the attached claims.

## Claims

1. Method for determining active and reactive acoustic intensity of at least one sound source based on determination of acoustic impedance and mean square velocity of an acoustic particle, the method comprising the following steps:

   - directly measuring (100) time signal of an acoustic pressure p(t) and an acoustic velocity $\overline{v}(t)$ = (vx(t), vy(t), vz(t)) produced by said at least one sound source and discretizing (101) them as p(n), vx(n), vy(n), vz(n) respectively;

   - computing (102) frequency spectra $\hat{P}m(\omega_n)$, $\left( \hat{V}_x^m(\omega_n), \hat{V}_y^m(\omega_n), \hat{V}_z^m(\omega_n) \right)$ of the measured signals by Fast Fourier Transform;

   - calibrating (103) the frequency spectra through suitable calibration functions K $(\omega)$ and $\hat{\Gamma}(\omega)$ = $(\hat{\Gamma}_x(\omega), \hat{\Gamma}_y(\omega), \Gamma_y(\omega))$, according to equations:

$$\hat{P}(\omega) = K(\omega) \cdot \hat{P}^m(\omega)$$

$$\hat{V}_x(\omega) = \Gamma_x(\omega) \cdot K(\omega) \cdot \hat{V}_x^m(\omega)$$

$$\hat{V}_y(\omega) = \Gamma_y(\omega) \cdot K(\omega) \cdot \hat{V}_y^m(\omega)$$

$$\hat{V}_z(\omega) = \Gamma_z(\omega) \cdot K(\omega) \cdot \hat{V}_z^m(\omega)$$

   - computing (104) a first complex vector impedance $\hat{Z}1(\omega_n)$, having real spatial components $R1_{x,y,z}(\omega_n)$ and

imaginary spatial components X1$_{x,y,z}$($\omega_n$), according to equations:
- computing (107) a second complex vector impedance $\hat{Z}2(\omega_n)$, having real spatial components R2$_{x,y,z}$($\omega_n$) and imaginary spatial components X2$_{x,y,z}$($\omega_n$), according to equations:

$$\hat{Z}1_x(\omega_n) = \frac{\hat{P}(\omega_n)\cdot\hat{V_x}(\omega_n)}{\hat{V_z}(\omega_n)\cdot\hat{V_x}(\omega_n)}$$

$$\hat{Z}1_y(\omega_n) = \frac{\hat{P}(\omega_n)\cdot\hat{V_y}(\omega_n)}{\hat{V_y}(\omega_n)\cdot\hat{V_y}(\omega_n)}$$

$$\hat{Z}1_z(\omega_n) = \frac{\hat{P}(\omega_n)\cdot\hat{V_z}(\omega_n)}{\hat{V_z}(\omega_n)\cdot\hat{V_z}(\omega_n)};$$

$$\hat{Z}2_x(\omega_n) = \frac{\hat{P}(\omega_n)\cdot\hat{P}(\omega_n)}{\hat{P}(\omega_n)\cdot\hat{V_x}(\omega_n)}$$

$$\hat{Z}2_y(\omega_n) = \frac{\hat{P}(\omega_n)\cdot\hat{P}(\omega_n)}{\hat{P}(\omega_n)\cdot\hat{V_y}(\omega_n)}$$

$$\hat{Z}2_z(\omega_n) = \frac{\hat{P}(\omega_n)\cdot\hat{P}(\omega_n)}{\hat{P}(\omega_n)\cdot\hat{V_z}(\omega_n)};$$

- computing (110) power spectra of velocity components:

$$\left|\widehat{V_x}\right|^2(\omega_n) = \widehat{V_x}\,\widehat{V_x^*}$$

$$\left|\widehat{V_y}\right|^2(\omega_n) = \widehat{V_y}\,\widehat{V_y^*}$$

$$\left|\widehat{V_z}\right|^2(\omega_n) = \widehat{V_z}\,\widehat{V_z^*}$$

where $\widehat{V_x^*}$, $\widehat{V_y^*}$, $\widehat{V_z^*}$ are complex conjugate spectra of the velocity components $\hat{V}_x, \hat{V}_y, \hat{V}_z$ ;
- computing (111) a frequency distribution of a first active intensity $\vec{I}1(\omega_n)$ according to equations:

$$\vec{I}1(\omega_n) = (R1_x\left|\widehat{V_x}\right|^2(\omega_n), R1_y\left|\widehat{V_y}\right|^2(\omega_n), R1_z\left|\widehat{V_z}\right|^2(\omega_n))$$

- computing (112) a frequency distribution of a second active intensity $\vec{I}2(\omega_n)$ according to equations:

$$\vec{I2}(\omega_n) = (R2_x|\widehat{V_x}|^2(\omega_n), R2_y|\widehat{V_y}|^2(\omega_n), R2_z|\widehat{V_z}|^2(\omega_n));$$

- determining (115) an active acoustic intensity $\vec{I}(\omega_n)$ and a first relative uncertainty $\varepsilon_i(\omega_n)$:, with i=(x, y, z), according to following equations:

$$\vec{I}(\omega_n) = \frac{\vec{I1}(\omega_n) + \vec{I2}(\omega_n)}{2}$$
$$\varepsilon_i(\omega_n) = \frac{|I1_i(\omega_n) - I2_i(\omega_n)|}{I_i(\omega_n)}$$

;

- computing (113a) a frequency distribution of a first reactive intensity $Q1(\omega_n)$ according to equation:

$$Q1(\omega_n) = \sqrt{\left(X1_x|\widehat{V_x}|^2(\omega_n)\right)^2 + \left(X1_y|\widehat{V_y}|^2(\omega_n)\right)^2 + \left(X1_z|\widehat{V_z}|^2(\omega_n)\right)^2};$$

- computing (114a) a frequency distribution of a second reactive intensity $Q2(\omega_n)$ according to equation:

$$Q2(\omega_n) = \sqrt{\left(X2_x|\widehat{V_x}|^2(\omega_n)\right)^2 + \left(X2_y|\widehat{V_z}|^2(\omega_n)\right)^2 + \left(X2_z|\widehat{V_z}|^2(\omega_n)\right)^2};$$

- determining (116a) a reactive acoustic intensity $Q(\omega_n)$ and a second relative uncertainty $\varepsilon_a(\omega_n)$, according to following equations:

$$Q(\omega_n) = \frac{Q1(\omega_n) + Q2(\omega_n)}{2}$$
$$\varepsilon_a(\omega_n) = \frac{|Q1(\omega_n) - Q2(\omega_n)|}{Q(\omega_n)}$$

2. Method for determining active and reactive acoustic intensity of at least one sound source based on determination of acoustic impedance and mean square velocity of an acoustic particle, the method comprising the following steps:

- directly measuring (100) time signals of an acoustic pressure p(t) and an acoustic velocity $\vec{v}(t)$ = (vx(t), vy(t), vz(t)) produced by said at least one sound source and discretizing (101) them as p(n), vx(n), vy(n), vz(n) respectively;
- computing (102) frequency spectra

$$\hat{P}^{m}(\omega_{n}) \quad , \quad (\quad \hat{V}_{x}^{m}(\omega_{n}) \quad , \quad \hat{V}_{y}^{m}(\omega_{n}) \quad , \quad \hat{V}_{z}^{m}(\omega_{n}) \quad )$$

of the measured signals by Fast Fourier Transform;

- calibrating (103) the frequency spectra through suitable calibration functions $\hat{K}(\omega)$ and $\hat{\Gamma}(\omega)$ = $(\hat{\Gamma}_x(\omega),\hat{\Gamma}_y(\omega),\Gamma_y(\omega))$, according to equations:

$$\hat{P}(\omega)=\mathrm{K}(\omega)\cdot\hat{P}^{m}(\omega)$$

$$\hat{V}_{x}(\omega)=\Gamma_{x}(\omega)\cdot\mathrm{K}(\omega)\cdot\hat{V}_{x}^{m}(\omega)$$

$$\hat{V}_{y}(\omega)=\Gamma_{y}(\omega)\cdot\mathrm{K}(\omega)\cdot\hat{V}_{y}^{m}(\omega)$$

$$\hat{V}_{z}(\omega)=\Gamma_{z}(\omega)\cdot\mathrm{K}(\omega)\cdot\hat{V}_{z}^{m}(\omega)$$

- computing (104) a first complex vector impedance $\hat{Z}1(\omega_n)$, having real spatial components $R1_{x,y,z}(\omega_n)$ and imaginary spatial components $X1_{x,y,z}(\omega_n)$, according to equations:

$$\hat{Z}1_{x}(\omega_{n})=\frac{\hat{P}(\omega_{n})\cdot\hat{V}_{x}(\omega_{n})}{\hat{V}_{x}(\omega_{n})\cdot\hat{V}_{x}(\omega_{n})}^{*}$$

$$\hat{Z}1_{y}(\omega_{n})=\frac{\hat{P}(\omega_{n})\cdot\hat{V}_{y}(\omega_{n})}{\hat{V}_{y}(\omega_{n})\cdot\hat{V}_{y}(\omega_{n})}^{*}$$

$$\hat{Z}1_{z}(\omega_{n})=\frac{\hat{P}(\omega_{n})\cdot\hat{V}_{z}(\omega_{n})}{\hat{V}_{z}(\omega_{n})\cdot\hat{V}_{z}(\omega_{n})} \quad ;$$

- computing (107) a second complex vector impedance $\hat{Z}2(\omega_n)$, having real spatial components $R2_{x,y,z}(\omega_n)$ and imaginary spatial components $X2_{x,y,z}(\omega_n)$, according to equations:

- computing (110) power spectra of velocity components:

$$\hat{Z}2_{x}(\omega_{n})=\frac{\hat{P}(\omega_{n})\cdot\hat{P}(\omega_{n})}{\hat{P}(\omega_{n})\cdot\hat{V}_{x}(\omega_{n})}$$

$$\hat{Z}2_y(\omega_n) = \frac{\hat{P}(\omega_n) \cdot \hat{P}(\omega_n)}{\hat{P}(\omega_n) \cdot \hat{V}_y(\omega_n)}$$

$$\hat{Z}2_z(\omega_n) = \frac{\hat{P}(\omega_n) \cdot \hat{P}(\omega_n)}{\hat{P}(\omega_n) \cdot \hat{V}_z(\omega_n)} ;$$

where $\hat{V}_x^*$ , $\hat{V}_y^*$ , $\hat{V}_z^*$ are complex conjugate spectra of the velocity components $\hat{V}_x$, $\hat{V}_y$, $\hat{V}_z$;

- computing (111) a frequency distribution of a first active intensity $\vec{I}1(\omega_n)$ according to equations:

$$\vec{I}1(\omega_n) = (R1_x|\widehat{V}_x|^2(\omega_n), R1_y|\widehat{V}_y|^2(\omega_n), R1_z|\widehat{V}_z|^2(\omega_n));$$

- computing (112) a frequency distribution of a second active intensity $\dfrac{\vec{I}2(\omega_n)}{}$ according to equations:

$$\vec{I}2(\omega_n) = (R2_x|\widehat{V}_x|^2(\omega_n), R2_y|\widehat{V}_y|^2(\omega_n), R2_z|\widehat{V}_z|^2(\omega_n));$$

- determining (115) an active acoustic intensity $\vec{I}(\omega_n)$ and a first relative uncertainty $\varepsilon_i(\omega_n)$:, with i=(x, y, z), according to following equations:

$$\vec{I}(\omega_n) = \frac{\vec{I}1(\omega_n) + \vec{I}2(\omega_n)}{2}$$
$$\varepsilon_i(\omega_n) = \frac{|I1_i(\omega_n) - I2_i(\omega_n)|}{I_i(\omega_n)} ;$$

- computing (113b) a frequency distribution of components $[\mathbb{Q}1^2(\omega n)]_{ij}$ , with i=(x, y, z), and j=(x, y, z), of a first square reactivity tensor $\mathbb{Q}1^2(\omega n)$ , according to equation:

$$[\mathbb{Q}1^2(\omega n)]_{ij} = X1_i(\omega n)|\widehat{V}_i|^2(\omega n) \cdot X1_j(\omega n)|\widehat{V}_j|^2(\omega n);$$

- computing (114b) a frequency distribution of components $[\mathbb{Q}2^2(\omega n)]_{ij}$ , with i=(x, y, z), and j=(x, y, z), of a second square reactivity tensor $\mathbb{Q}2^2(\omega n)$ , according to equation:

$$[\mathbb{Q}2^2(\omega n)]_{ij} = X2_i(\omega n)|\widehat{V}_i|^2(\omega n) \cdot X2_j(\omega n)|\widehat{V}_j|^2(\omega n) ;$$

- determining (116b) a mean reactivity tensor $\mathbb{Q}(\omega n)$ and a third relative uncertainty $\varepsilon_b$ according to following equations:

$$\mathbb{Q}(\omega n) = \frac{\sqrt{\mathbb{Q}1^2(\omega n)} + \sqrt{\mathbb{Q}2^2(\omega n)}}{2}$$

$$\varepsilon_b(\omega n) = \frac{\left\| \sqrt{\mathbb{Q}1^2(\omega n)} - \sqrt{\mathbb{Q}2^2(\omega n)} \right\|}{\| \mathbb{Q}(\omega n) \|}.$$

3. Method according to claim 1 or 2, wherein the step of computing (110) power spectra of velocity components comprises computing pressure power spectrum:

$$\left| \hat{P} \right|^2 (\omega_n) = \hat{P}\hat{P}^*$$

where $\hat{P}^*$ is complex conjugate spectrum of pressure $\hat{P}$.

4. Method according to any one of the preceding claims, wherein the calibration functions K ($\omega$) and $\hat{\Gamma}(\omega) \equiv (\hat{\Gamma}_x(\omega), \hat{\Gamma}_y(\omega), \hat{\Gamma}_y(\omega))$ are known a priori, i.e. they are provided by manufacturers of velocimetry or microphone probes, or they are obtained through methods known in literature.

5. Method according to any one of the preceding claims, comprising a step (117) of adding up the spectral components of the active acoustic intensity $\vec{I}(\omega_n)$ over all frequencies $\omega$ n obtaining an active intensity vector $\vec{I}$, according to equation $\vec{I} = \sum_{n=1}^{N/2} \vec{I}(\omega_n)$ , where N/2 is a number of spectral lines.

6. Method according to claim 5, comprising a step (118) of determining a magnitude of the active intensity I by computing a norm of the active intensity vector $\vec{I}$.

7. Method according to claim 3 or any one of claims 4 to 6 when depending on claim 3, comprising a step (119) of computing an apparent intensity $J$ according to equation

$$J = \sum_{n=1}^{N/2} \left| \hat{P} \right|^2 (\omega_n) \cdot \sum_{n=1}^{N/2} \left( \left| \hat{V}_x \right|^2 (\omega_n) + \left| \hat{V}_y \right|^2 (\omega_n) + \left| \hat{V}_z \right|^2 (\omega_n) \right).$$

8. Method according to claims 6 and 7, comprising a step (120) of determining a magnitude Q of the reactive intensity according to equation $Q = \sqrt{J^2 - I^2}$ .

9. Method according to any one of claims 5 to 8 when depending on claim 2, further comprising the following steps:

- normalizing (124) the active intensity vector $\vec{I}$ obtaining a direction $\vec{T} = \frac{\vec{I}}{|\vec{I}|}$ , and
- computing (125) a frequency distribution of a reactive intensity vector $\vec{Q}_T(\omega_n)$ in direction of the active intensity $\vec{I}$, projecting the mean reactivity tensor Q($\omega$n) in the direction $\vec{T}$ of the active intensity $\vec{I}$ according to equation:

$$\vec{Q}_T = \mathbb{Q}(\omega n) \cdot \vec{T}$$

10. Method according to any one of the preceding claims 3 to 9, further comprising a self-calibration algorithm comprising the steps of:

- computing (121) a calibration function $\hat{\Gamma}m(\omega_n)$ as

$$\Gamma_m'(\omega_n) = \left[ \frac{Z_x(\omega_n) \cdot I_x}{\sum_{n=1}^{N/2} |P(\omega_n)|^2}, \quad \frac{Z_y(\omega_n) \cdot I_y}{\sum_{n=1}^{N/2} |P(\omega_n)|^2}, \quad \frac{Z_z(\omega_n) \cdot I_z}{\sum_{n=1}^{N/2} |P(\omega_n)|^2} \right]$$

where m corresponds to the m-th iteration of the algorithm, impedance $Z(\omega)$ is selected between the first and the second impedances $Z1$, $Z2$ respectively, and $Ix$, $Iy$, $Iz$, are the components of the active intensity $\vec{I}(\omega_n)$;

- performing again the method from the calibrating step (103);
- computing (122) components of a residual indicator $L_{m,\,m-1}$ indicating a difference between the spectra of the active intensity $\vec{I_m}(\omega_n)$ and the spectra of the active intensity $\vec{I_{m-1}}(\omega_n)$ obtained from the preceding iteration, i.e. $L_{m,m-1} = L_{m,m-1}\,(\vec{I_m}(\omega_n),\,\vec{I}_{m-1}(\omega_n))$;
- checking (123) whether the residual indicator $L_{m,\,m-1}$ is larger than a predetermined threshold $\delta = (\delta_x,\,\delta_y,\,\delta_z)$ whereby:

if the residual indicator $L_{m,m-1}$ is larger than the predetermined threshold $\delta$, a new function $\hat{\Gamma}_{m+1}(\omega_n)$ is computed (121) and the method is performed again starting from the calibrating step (103), alternatively if the residual indicator $L_{m,m-1}$ is smaller than or equal to the predetermined threshold $\delta$, the method terminates.

11. Method according to claim 10, wherein the residual indicator may indicate the difference between the active intensity $I_m$ over whole measured frequency band and the active intensity $I_{m-1}$ over whole measured frequency band obtained from the preceding iteration, i.e. $L_{m,m-1} = L_{m,m-1}\,(I_m,\,I_{m-1})$, and the predetermined threshold $\delta$ is a scalar.

12. Apparatus (10) configured to perform the method for determining active and reactive acoustic intensity according to any one of claims 1 to 11, comprising a device (15) including velocimetry probes (1, 2, 3) and microphone probes (4) for directly detecting an acoustic velocity in three directions orthogonal to each other and an acoustic pressure, an A/D converter (16) coupled to the device (15) for receiving time signals of velocity and pressure and for sending them in discretized form to a processor (17) configured for performing the method for determining active and reactive acoustic intensity according to any one of claims 1 to 11.,

13. Apparatus (10) according to claim 12, wherein the processor (17) is connected to one or more display (18).

**Patentansprüche**

1. Verfahren zum Bestimmen aktiver und reaktiver Schallintensität mindestens einer Schallquelle auf der Grundlage einer Bestimmung akustischer Impedanz und mittlerer quadratischer Geschwindigkeit eines akustischen Partikels, wobei das Verfahren die folgenden Schritte umfasst:

- direktes Messen (100) eines Zeitsignals eines Schalldrucks p(t) und einer Schallgeschwindigkeit $\vec{v}(t)$ = (vx(t), vy(t), vz(t)), die von der mindestens einen Schallquelle erzeugt werden, und deren Diskretisierung (101) jeweils als p(n), vx(n), vy(n), vz(n);

- Berechnen (102) von Frequenzspektren $\hat{P}^m(\omega_n)$, $\left( \hat{V}_x^m(\omega_n),\, \hat{V}_y^m(\omega_n),\, \hat{V}_z^m(\omega_n) \right)$ der gemessenen Signale durch schnelle Fourier-Transformation;

- Kalibrieren (103) der Frequenzspektren durch geeignete Kalibrierfunktionen $K(\omega)$ und $\hat{\Gamma}(\omega) \equiv (\hat{\Gamma}_x(\omega),\, \hat{\Gamma}_y(\omega),\, \hat{\Gamma}_z(\omega))$ gemäß den Gleichungen:

$$\hat{P}(\omega) = K(\omega) \cdot \hat{P}^m(\omega)$$

$$\hat{V}_x(\omega) = \Gamma_x(\omega) \cdot K(\omega) \cdot \hat{V}_x^m(\omega)$$

$$\hat{V}_y(\omega) = \Gamma_y(\omega) \cdot K(\omega) \cdot \hat{V}_y^m(\omega)$$

$$\hat{V}_z(\omega) = \Gamma_z(\omega) \cdot K(\omega) \cdot \hat{V}_z^m(\omega) \quad ;$$

- Berechnen (104) einer ersten komplexen Vektorimpedanz $\hat{Z}1(\omega_n)$, mit realen räumlichen Komponenten $R1_{x,y,z}(\omega_n)$ und imaginären Raumkomponenten $X1_{x,y,z}(\omega_n)$ gemäß den Gleichungen:

$$\hat{Z}1_x(\omega_n) = \frac{\hat{P}(\omega_n) \cdot \hat{V}_x(\omega_n)}{\hat{V}_x(\omega_n) \cdot \hat{V}_x(\omega_n)}$$

$$\hat{Z}1_y(\omega_n) = \frac{\hat{P}(\omega_n) \cdot \hat{V}_y(\omega_n)}{\hat{V}_y(\omega_n) \cdot \hat{V}_y(\omega_n)}$$

$$\hat{Z}1_z(\omega_n) = \frac{\hat{P}(\omega_n) \cdot \hat{V}_z(\omega_n)}{\hat{V}_z(\omega_n) \cdot \hat{V}_z(\omega_n)} \quad ;$$

- Berechnen (107) einer zweiten komplexen Vektorimpedanz $\hat{Z}2(\omega_n)$ mit realen räumlichen Komponenten $R2_{x,y,z}(\omega_n)$ und imaginären Raumkomponenten $X2_{x,y,z}(\omega_n)$ gemäß den Gleichungen:

$$\hat{Z}2_x(\omega_n) = \frac{\hat{P}(\omega_n) \cdot \hat{P}(\omega_n)}{\hat{P}(\omega_n) \cdot \hat{V}_x(\omega_n)}$$

$$\hat{Z}2_y(\omega_n) = \frac{\hat{P}(\omega_n) \cdot \hat{P}(\omega_n)}{\hat{P}(\omega_n) \cdot \hat{V}_y(\omega_n)}$$

$$\hat{Z}2_z(\omega_n) = \frac{\hat{P}(\omega_n) \cdot \hat{P}(\omega_n)}{\hat{P}(\omega_n) \cdot \hat{V}_z(\omega_n)} \quad ;$$

- Berechnen (110) von Leistungsspektren von Geschwindigkeitskomponenten:

$$\left|\hat{V}_x\right|^2(\omega_n) = \hat{V}_x \hat{V}_x^{*}$$

$$\left|\hat{V}_y\right|^2(\omega_n) = \hat{V}_y \hat{V}_y^{*}$$

$$\left|\widehat{V_z}\right|^2(\omega_n) = \widehat{V_z}\widehat{V_z}^{*}$$

wobei $\widehat{V_x}^{*}$, $\widehat{V_y}^{*}$, $\widehat{V_z}^{*}$ komplex konjugierte Spektren der Geschwindigkeitskomponenten $\hat{V}_x$, $\hat{V}_y$, $\hat{V}_z$ sind;

- Berechnen (111) einer Frequenzverteilung einer ersten aktiven Intensität $\vec{I}1(\omega_n)$ gemäß den Gleichungen:

$$\vec{I}1(\omega_n) = \left(R1_x\left|\widehat{V_x}\right|^2(\omega_n), R1_y\left|\widehat{V_y}\right|^2(\omega_n), R1_z\left|\widehat{V_z}\right|^2(\omega_n)\right)$$

- Berechnen (112) einer Frequenzverteilung einer zweiten aktiven Intensität $\vec{I}2(\omega_n)$ gemäß den Gleichungen:

$$\vec{I}2(\omega_n) = \left(R2_x\left|\widehat{V_x}\right|^2(\omega_n), R2_y\left|\widehat{V_y}\right|^2(\omega_n), R2_z\left|\widehat{V_z}\right|^2(\omega_n)\right);$$

- Bestimmen (115) einer aktiven akustischen Intensität $\vec{I}(\omega_n)$ und einer ersten relativen Unsicherheit $\varepsilon_i(\omega_n)$ mit i=(x, y, z), gemäß den folgenden Gleichungen:

$$\begin{cases} \vec{I}(\omega_n) = \dfrac{\vec{I1}(\omega_n) + \vec{I2}(\omega_n)}{2} \\ \varepsilon_i(\omega_n) = \dfrac{\left|I1_i(\omega_n) - I2_i(\omega_n)\right|}{I_i(\omega_n)} \end{cases};$$

- Berechnen (113a) einer Frequenzverteilung einer ersten reaktiven Intensität $Q1(\omega_n)$ gemäß der Gleichung:

$$Q1(\omega_n) = \sqrt{\left(X1_x\left|\widehat{V_x}\right|^2(\omega_n)\right)^2 + \left(X1_y\left|\widehat{V_y}\right|^2(\omega_n)\right)^2 + \left(X1_z\left|\widehat{V_z}\right|^2(\omega_n)\right)^2};$$

- Berechnen (114a) einer Frequenzverteilung einer zweiten reaktiven Intensität $Q2(\omega_n)$ gemäß der Gleichung:

$$Q2(\omega_n) = \sqrt{\left(X2_x\left|\widehat{V_x}\right|^2(\omega_n)\right)^2 + \left(X2_y\left|\widehat{V_y}\right|^2(\omega_n)\right)^2 + \left(X2_z\left|\widehat{V_z}\right|^2(\omega_n)\right)^2};$$

- Bestimmen (116a) einer reaktiven akustischen Intensität $Q(\omega_n)$ und einer zweiten relativen Unsicherheit $\varepsilon_a(\omega_n)$ gemäß den folgenden Gleichungen:

$$\begin{cases} Q(\omega_n) = \dfrac{Q1(\omega_n) + Q2(\omega_n)}{2} \\ \varepsilon_a(\omega_n) = \dfrac{\left|Q1(\omega_n) - Q2(\omega_n)\right|}{Q(\omega_n)} \end{cases}.$$

2. Verfahren zum Bestimmen aktiver und reaktiver Schallintensität mindestens einer Schallquelle auf der Grundlage einer Bestimmung akustischer Impedanz und mittlerer quadratischer Geschwindigkeit eines akustischen Partikels, wobei das Verfahren die folgenden Schritte umfasst:

- direktes Messen (100) von Zeitsignalen eines Schalldrucks p(t) und einer Schallgeschwindigkeit $\vec{v}$(t) = (vx(t), vy(t), vz(t)), die von der mindestens einen Schallquelle erzeugt werden, und deren Diskretisierung (101) jeweils als p(n), vx(n), vy(n), vz(n);

- Berechnen (102) von Frequenzspektren $\hat{P}m(\omega_n)$, $\left(\hat{V}_x^m(\omega_n), \hat{V}_y^m(\omega_n), \hat{V}_z^m(\omega_n)\right)$ der gemessenen Signale durch schnelle Fourier-Transformation;

- Kalibrieren (103) der Frequenzspektren durch geeignete Kalibrierfunktionen K $(\omega)$ und $\hat{\Gamma}(\omega) \equiv (\hat{\Gamma}_x(\omega), \hat{\Gamma}_y(\omega), \hat{\Gamma}_z(\omega))$ gemäß den Gleichungen:

$$\hat{P}(\omega) = K(\omega) \cdot \hat{P}^m(\omega)$$

$$\hat{V}_x(\omega) = \Gamma_x(\omega) \cdot K(\omega) \cdot \hat{V}_x^m(\omega)$$

$$\hat{V}_y(\omega) = \Gamma_y(\omega) \cdot K(\omega) \cdot \hat{V}_y^m(\omega)$$

$$\hat{V}_z(\omega) = \Gamma_z(\omega) \cdot K(\omega) \cdot \hat{V}_z^m(\omega)$$

- Berechnen (104) einer ersten komplexen Vektorimpedanz $\hat{Z}1(\omega_n)$, mit realen räumlichen Komponenten $R1_{x,y,z}(\omega_n)$ und imaginären Raumkomponenten $X1_{x,y,z}(\omega_n)$ gemäß den Gleichungen:

$$\hat{Z}1_x(\omega_n) = \frac{\hat{P}(\omega_n) \cdot \hat{V}_x(\omega_n)}{\hat{V}_x(\omega_n) \cdot \hat{V}_x(\omega_n)}$$

$$\hat{Z}1_y(\omega_n) = \frac{\hat{P}(\omega_n) \cdot \hat{V}_y(\omega_n)}{\hat{V}_y(\omega_n) \cdot \hat{V}_y(\omega_n)}$$

$$\hat{Z}1_z(\omega_n) = \frac{\hat{P}(\omega_n) \cdot \hat{V}_z(\omega_n)}{\hat{V}_z(\omega_n) \cdot \hat{V}_z(\omega_n)}$$

- Berechnen (107) einer zweiten komplexen Vektorimpedanz $\hat{Z}2(\omega_n)$, mit realen räumlichen Komponenten $R2_{x,y,z}(\omega_n)$ und imaginären Raumkomponenten $X2_{x,y,z}(\omega_n)$ gemäß den Gleichungen:

$$\hat{Z}2_x(\omega_n) = \frac{\hat{P}(\omega_n)\cdot\hat{P}(\omega_n)}{\hat{P}(\omega_n)\cdot\hat{V}_x(\omega_n)}$$

$$\hat{Z}2_y(\omega_n) = \frac{\hat{P}(\omega_n)\cdot\hat{P}(\omega_n)}{\hat{P}(\omega_n)\cdot\hat{V}_y(\omega_n)}$$

$$\hat{Z}2_z(\omega_n) = \frac{\hat{P}(\omega_n)\cdot\hat{P}(\omega_n)}{\hat{P}(\omega_n)\cdot\hat{V}_z(\omega_n)}$$

- Berechnen (110) von Leistungsspektren von Geschwindigkeitskomponenten:

$$\left|\widehat{V_x}\right|^2(\omega_n) = \widehat{V_x}\widehat{V_x}^*$$

$$\left|\widehat{V_y}\right|^2(\omega_n) = \widehat{V_y}\widehat{V_y}^*$$

$$\left|\widehat{V_z}\right|^2(\omega_n) = \widehat{V_z}\widehat{V_z}^*$$

wobei $\widehat{V_x}^*$, $\widehat{V_y}^*$ $\widehat{V_z}^*$ komplex konjugierte Spektren der Geschwindigkeitskomponenten $\hat{V}_x$, $\hat{V}_y$, $\hat{V}_z$ sind;
- Berechnen (111) einer Frequenzverteilung einer ersten aktiven Intensität $\vec{I}1(\omega_n)$ gemäß den Gleichungen:

$$\vec{I}1(\omega_n) = \left(\mathrm{R}1_x\left|\widehat{V_x}\right|^2(\omega_n), \mathrm{R}1_y\left|\widehat{V_y}\right|^2(\omega_n), \mathrm{R}1_z\left|\widehat{V_z}\right|^2(\omega_n)\right);$$

- Berechnen (112) einer Frequenzverteilung einer zweiten aktiven Intensität $\vec{I}2(\omega_n)$ gemäß den Gleichungen:

$$\vec{I}2(\omega_n) = \left(\mathrm{R}2_x\left|\widehat{V_x}\right|^2(\omega_n), \mathrm{R}2_y\left|\widehat{V_y}\right|^2(\omega_n), \mathrm{R}2_z\left|\widehat{V_z}\right|^2(\omega_n)\right)$$

- Bestimmen (115) einer aktiven akustischen Intensität $\vec{I}(\omega_n)$ und einer ersten relativen Unsicherheit $\varepsilon_i(\omega_n)$ mit i=(x, y, z), gemäß den folgenden Gleichungen:

$$\vec{I}(\omega_n) = \frac{\vec{I}1(\omega_n) + \vec{I}2(\omega_n)}{2}$$
$$\varepsilon_i(\omega_n) = \frac{|I1_i(\omega_n) - I2_i(\omega_n)|}{I_i(\omega_n)}$$

- Berechnen (113b) einer Frequenzverteilung von Komponenten $[\mathbb{Q}1^2(\omega n)]_{ij}$ mit i=(x, y, z), und j=(x, y, z), eines ersten quadratischen Reaktivitätstensors $\mathbb{Q}1^2(\omega n)$ gemäß der Gleichung:

$$[\mathbb{Q}1^2(\omega n)]_{ij} = X1_i(\omega n)|\hat{V}_i|^2(\omega n) \cdot X1_j(\omega n)|\hat{V}_j|^2(\omega n);$$

- Berechnen (114b) einer Frequenzverteilung von Komponenten $[\mathbb{Q}2^2(\omega n)]_{ij}$, mit i=(x, y, z), und j=(x, y, z), eines zweiten quadratischen Reaktivitätstensors $\mathbb{Q}2^2(\omega n)$ gemäß der Gleichung:

$$[\mathbb{Q}2^2(\omega n)]_{ij} = X2_i(\omega n)|\hat{V}_i|^2(\omega n) \cdot X2_j(\omega n)|\hat{V}_j|^2(\omega n);$$

- Bestimmen (116b) eines mittleren Reaktivitätstensors $\mathbb{Q}(\omega n)$ und einer dritten relativen Unsicherheit $\varepsilon_b$ gemäß den folgenden Gleichungen:

$$\mathbb{Q}(\omega n) = \frac{\sqrt{\mathbb{Q}1^2(\omega n)} + \sqrt{\mathbb{Q}2^2(\omega n)}}{2}$$

$$\epsilon_b(\omega n) = \frac{\left\|\sqrt{\mathbb{Q}1^2(\omega n)} - \sqrt{\mathbb{Q}2^2(\omega n)}\right\|}{\|\mathbb{Q}(\omega n)\|}.$$

3. Verfahren nach Anspruch 1 oder 2, wobei der Schritt des Berechnens (110) von Leistungsspektren von Geschwindigkeitskomponenten das Berechnen von Druckleistungsspektren umfasst:

$$\left|\hat{P}\right|^2(\omega n) = \hat{P}\hat{P}^*$$

wobei $\hat{P}^*$ das komplex konjugierte Spektrum des Drucks $\hat{P}$ ist.

4. Verfahren nach einem der vorhergehenden Ansprüche, wobei die Kalibrierfunktionen $K(\omega)$ und $\hat{\Gamma}(\omega) \equiv (\hat{\Gamma}_x(\omega), \hat{\Gamma}_y(\omega), \hat{\Gamma}_z(\omega))$ a priori bekannt sind, d. h. von den Herstellern von Geschwindigkeitsmess- oder Mikrofonsonden zur Verfügung gestellt werden oder durch in der Literatur bekannte Verfahren erhalten werden.

5. Verfahren nach einem der vorhergehenden Ansprüche, umfassend einen Schritt (117) eines Aufaddierens der spektralen Komponenten der aktiven akustischen Intensität $\vec{I}(\omega_n)$ über alle Frequenzen $\omega n$, um einen Vektor der aktiven Intensität zu erhalten $\vec{I}$, gemäß der Gleichung $\vec{I} = \sum_{n=1}^{N/2} \vec{I}(\omega n)$, wobei N/2 eine Anzahl von Spektrallinien ist.

6. Verfahren nach Anspruch 5, umfassend einen Schritt (118) eines Bestimmens einer Größe der aktiven Intensität I durch Berechnen einer Norm des Vektors der aktiven Intensität $\vec{I}$.

7. Verfahren nach Anspruch 3 oder einem der Ansprüche 4 bis 6 in Abhängigkeit von Anspruch 3, umfassend einen Schritt (119) eines Berechnens einer anscheinenden Intensität J gemäß der Gleichung

$$J = \sum_{n=1}^{N/2} \left|\hat{P}\right|^2(\omega_n) \cdot \sum_{n=1}^{N/2}\left(\left|\hat{V}_x\right|^2(\omega_n) + \left|\hat{V}_y\right|^2(\omega_n) + \left|\hat{V}_z\right|^2(\omega_n)\right)$$

8. Verfahren nach einem der Ansprüche 6 und 7, umfassend einen Schritt (120) eines Bestimmens einer Größe Q der reaktiven Intensität gemäß der Gleichung $Q = \sqrt{J^2 - I^2}$.

9. Verfahren nach einem der Ansprüche 5 bis 8 in Abhängigkeit von Anspruch 2, ferner umfassend die folgenden Schritte:

- Normalisieren (124) des aktiven Intensitätsvektors $\vec{I}$ zum Ermitteln einer Richtung $\vec{T} = \dfrac{\vec{I}}{|\vec{I}|}$ und

- Berechnen (125) einer Frequenzverteilung eines reaktiven Intensitätsvektors $\vec{Q}_T(\omega_n)$ in Richtung der aktiven Intensität $\vec{I}$, durch Projizieren des mittleren Reaktivitätstensors $\mathbb{Q}(\omega n)$ in die Richtung $\vec{T}$ der aktiven Intensität $\vec{I}$ gemäß der Gleichung:

$$\vec{Q}_T = \mathbb{Q}(\omega n) \cdot \vec{T}$$

10. Verfahren nach einem der vorangehenden Ansprüche 3 bis 9, das ferner einen Selbstkalibrierungsalgorithmus umfasst, der die folgenden Schritte umfasst:

- Berechnen (121) einer Kalibrierungsfunktion $\hat{\Gamma}_m(\omega_n)$ nach

$$\Gamma_m'(\omega_n) = \left[ \frac{Z_x(\omega_n) \cdot I_x}{\sum\limits_{n=1}^{N/2} |P(\omega_n)|^2}, \quad \frac{Z_y(\omega_n) \cdot I_y}{\sum\limits_{n=1}^{N/2} |P(\omega_n)|^2}, \quad \frac{Z_z(\omega_n) \cdot I_z}{\sum\limits_{n=1}^{N/2} |P(\omega_n)|^2} \right]$$

wobei m der m-ten Iteration des Algorithmus entspricht, die Impedanz $Z(\omega)$ aus der ersten und der zweiten Impedanz Z1 bzw. Z2 gewählt wird, und Ix, Iy, Iz die Komponenten der aktiven Intensität $\vec{I}(\omega_n)$ sind;
- erneute Durchführung des Verfahrens ab dem Kalibrierungsschritt (103);
- Berechnen (122) von Komponenten eines Restindikators $L_{m, m-1}$, der eine Differenz zwischen den Spektren der aktiven Intensität $\vec{I_m}(\omega_n)$ und den Spektren der aktiven Intensität $\vec{I_{m-1}}(\omega_n)$ die aus der vorangegangenen Iteration erhalten wurden, d.h. $L_{m,m-1} = L_{m,m-1} (\vec{I_m}(\omega_n), \vec{I_{m-1}}(\omega_n))$;
- Prüfen (123), ob der Restindikator $L_{m,m-1}$ größer als ein vorbestimmter Schwellenwert ist $\delta = (\delta_x, \delta_y, \delta_z)$, wobei:

wenn der Restindikator $L_{m,m-1}$ größer als der vorgegebene Schwellenwert $\delta$ ist, eine neue Funktion $\hat{\Gamma}_{m+1}(\omega_n)$ berechnet (121) und das Verfahren ab dem Kalibrierungsschritt (103) erneut durchgeführt wird, oder,
wenn der Restindikator $L_{m,m-1}$ kleiner oder gleich dem vorgegebenen Schwellenwert $\delta$ ist, das Verfahren beendet wird.

11. Verfahren nach Anspruch 10, wobei der Restindikator die Differenz zwischen der aktiven Intensität $I_m$ über das gesamte gemessene Frequenzband und der aktiven Intensität $I_{m-1}$ über das gesamte gemessene Frequenzband, die aus der vorhergehenden Iteration erhalten wurde, anzeigen kann, d.h. $L_{m, m-1} = L_{m, m-1} (I_m, I_{m-1})$, und der vorbestimmte Schwellenwert $\delta$ ein Skalar ist.

12. Vorrichtung (10), die so konfiguriert ist, dass sie das Verfahren zum Bestimmen der aktiven und reaktiven Schallintensität nach einem der Ansprüche 1 bis 11 durchführt, mit einer Vorrichtung (15), die Geschwindigkeitsmesssonden (1, 2, 3) und Mikrofonsonden (4) zum direkten Erfassen einer Schallgeschwindigkeit in drei zueinander orthogonalen Richtungen und eines Schalldrucks enthält, einen A/D-Wandler (16), der mit der Vorrichtung (15) gekoppelt ist, um Zeitsignale der Geschwindigkeit und des Drucks zu empfangen und sie in diskretisierter Form an einen Prozessor (17) zu senden, der so eingerichtet ist, dass er das Verfahren zum Bestimmen der aktiven und reaktiven Schallintensität nach einem der Ansprüche 1 bis 11 durchführt.

13. Gerät (10) nach Anspruch 12, wobei der Prozessor (17) mit einem oder mehreren Displays (18) verbunden ist.


**Revendications**

1. Procédé de détermination de l'intensité acoustique active et réactive d'au moins une source sonore à partir de la détermination de l'impédance acoustique et de la vitesse quadratique moyenne d'une particule acoustique, le procédé comprenant les étapes suivantes :

- mesure directe (100) du signal temporel d'une pression acoustique p(t) et d'une vitesse acoustique $\vec{v}$(t) = (vx(t), vy(t), vz(t)) produites par ladite au moins une source sonore et leur discrétisation (101) en tant que p(n), vx(n), vy(n), vz(n) respectivement ;

- calcul (102) de spectres de fréquence $\hat{P}^m(\omega_n)$, $\left( \hat{V}_x^m(\omega_n) , \hat{V}_y^m(\omega_n) , \hat{V}_z^m(\omega_n) \right)$ des signaux mesurés par Transformation de Fourier Rapide ;

- étalonnage (103) des spectres de fréquence au moyen de fonctions d'étalonnage appropriées K ($\omega$) et $\hat{\Gamma}(\omega)$ = $(\hat{\Gamma}_x(\omega), \hat{\Gamma}_y(\omega), \hat{\Gamma}_y(\omega))$ selon les équations :

$$\hat{P}(\omega) = K(\omega) \cdot \hat{P}^m(\omega)$$

$$\hat{V}_x(\omega) = \Gamma_x(\omega) \cdot K(\omega) \cdot \hat{V}_x^m(\omega)$$

$$\hat{V}_y(\omega) = \Gamma_y(\omega) \cdot K(\omega) \cdot \hat{V}_y^m(\omega)$$

$$\hat{V}_z(\omega) = \Gamma_z(\omega) \cdot K(\omega) \cdot \hat{V}_z^m(\omega)$$

- calcul (104) d'une première impédance vectorielle complexe $\hat{Z}1(\omega_n)$, présentant des composantes spatiales réelles $R1_{x,y,z}(\omega_n)$ et des composantes spatiales imaginaires $X1_{x,y,z}(\omega_n)$, selon les équations :

$$\hat{Z}1_x(\omega_n) = \frac{\hat{P}(\omega_n) \cdot \hat{V}_x(\omega_n)}{\hat{V}_x(\omega_n) \cdot \hat{V}_x(\omega_n)}$$

$$\hat{Z}1_y(\omega_n) = \frac{\hat{P}(\omega_n) \cdot \hat{V}_y(\omega_n)}{\hat{V}_y(\omega_n) \cdot \hat{V}_y(\omega_n)}$$

$$\hat{Z}1_z(\omega_n) = \frac{\hat{P}(\omega_n) \cdot \hat{V}_z(\omega_n)}{\hat{V}_z(\omega_n) \cdot \hat{V}_z(\omega_n)} ;$$

- calcul (107) d'une seconde impédance vectorielle complexe $\hat{Z}2(\omega_n)$, présentant des composantes spatiales réelles R2$_{x,y,z}$($\omega_n$) et des composantes spatiales imaginaires X2$_{x,y,z}$($\omega_n$), selon les équations :

$$\hat{Z}2_x(\omega_n) = \frac{\hat{P}(\omega_n) \cdot \hat{P}(\omega_n)}{\hat{P}(\omega_n) \cdot \hat{V}_x(\omega_n)}$$

$$\hat{Z}2_y(\omega_n) = \frac{\hat{P}(\omega_n) \cdot \hat{P}(\omega_n)}{\hat{P}(\omega_n) \cdot \hat{V}_y(\omega_n)}$$

$$\hat{Z}2_z(\omega_n) = \frac{\hat{P}(\omega_n) \cdot \hat{P}(\omega_n)}{\hat{P}(\omega_n) \cdot \hat{V}_z(\omega_n)} ;$$

- calcul (110) de spectres de puissance des composantes de vitesse :

$$\left|\hat{V}_x\right|^2(\omega_n) = \hat{V}_x \, \hat{V}_x^*$$

$$\left|\hat{V}_y\right|^2(\omega_n) = \hat{V}_y \, \hat{V}_y^*$$

$$\left|\hat{V}_z\right|^2(\omega_n) = \hat{V}_z \, \hat{V}_z^*$$

où $\hat{V}_x^*$, $\hat{V}_y^*$, $\hat{V}_z^*$ sont des spectres conjugués complexes des composantes de vitesse $\hat{V}_x$, $\hat{V}_y$, $\hat{V}_z$ ;

- calcul (111) d'une distribution de fréquence d'une première intensité active $\vec{I}1(\omega_n)$ selon les équations :

$$\vec{I}1(\omega_n) = (R1_x\left|\hat{V}_x\right|^2(\omega_n), R1_y\left|\hat{V}_y\right|^2(\omega_n), R1_z\left|\hat{V}_z\right|^2(\omega_n))$$

- calcul (112) d'une distribution de fréquence d'une seconde intensité active $\vec{I}2(\omega_n)$ selon les équations :

$$\vec{I}2(\omega_n) = (R2_x\left|\hat{V}_x\right|^2(\omega_n), R2_y\left|\hat{V}_y\right|^2(\omega_n), R2_z\left|\hat{V}_z\right|^2(\omega_n));$$

- détermination (115) d'une intensité acoustique active $\vec{I}(\omega_n)$ et d'une première incertitude relative $\varepsilon_i(\omega_n)$:, avec i=(x, y, z), selon les équations suivantes :

$$\bar{I}(\omega_n) = \frac{\vec{I1}(\omega_n) + \vec{I2}(\omega_n)}{2}$$

$$\varepsilon_i(\omega_n) = \frac{\left|I1_i(\omega_n) - I2_i(\omega_n)\right|}{I_i(\omega_n)}$$ ;

- calcul (113a) d'une distribution de fréquence d'une première intensité réactive $Q1(\omega_n)$ selon l'équation :

$$Q1(\omega_n) = \sqrt{\left(X1_x\left|\hat{V}_x\right|^2(\omega_n)\right)^2 + \left(X1_y\left|\hat{V}_y\right|^2(\omega_n)\right)^2 + \left(X1_z\left|\hat{V}_z\right|^2(\omega_n)\right)^2};$$

- calcul (114a) d'une distribution de fréquence d'une deuxième intensité réactive $Q2(\omega_n)$ selon l'équation :

$$Q2(\omega_n) = \sqrt{\left(X2_x\left|\hat{V}_x\right|^2(\omega_n)\right)^2 + \left(X2_y\left|\hat{V}_z\right|^2(\omega_n)\right)^2 + \left(X2_z\left|\hat{V}_z\right|^2(\omega_n)\right)^2};$$

- détermination (116a) d'une intensité acoustique relative $Q(\omega_n)$ et d'une deuxième incertitude relative $\varepsilon_a(\omega_n)$, selon les équations suivantes :

$$Q(\omega_n) = \frac{Q1(\omega_n) + Q2(\omega_n)}{2}$$

$$\varepsilon_a(\omega_n) = \frac{\left|Q1(\omega_n) - Q2(\omega_n)\right|}{Q(\omega_n)}$$

2. Procédé de détermination de l'intensité acoustique active et réactive d'au moins une source sonore à partir de la détermination de l'impédance acoustique et de la vitesse quadratique moyenne d'une particule acoustique, le procédé comprenant les étapes suivantes :

- mesure directe (100) des signaux temporels d'une pression acoustique p(t) et d'une vitesse acoustique $\vec{v}$(t) = (vx(t), vy(t), vz(t)) produites par ladite au moins une source sonore et leur discrétisation (101) en tant que p(n), vx(n), vy(n), vz(n) respectivement ;

- calcul (102) de spectres de fréquence du $\hat{P}^m(\omega_n)$, ( $\hat{V}_x^m(\omega_n)$ , $\hat{V}_y^m(\omega_n)$ , $\hat{V}_z^m(\omega_n)$ ) des signaux mesurés par Transformation de Fourier Rapide ;

- étalonnage (103) des spectres de fréquence au moins de fonctions d'étalonnage appropriées K$(\omega)$ et $\hat{\Gamma}(\omega) \equiv (\hat{\Gamma}_x(\omega), \hat{\Gamma}_y(\omega), \hat{\Gamma}_y(\omega))$, selon les équations :

$$\hat{P}(\omega) = K(\omega) \cdot \hat{P}^m(\omega)$$

$$\hat{V}_x(\omega) = \Gamma_x(\omega) \cdot K(\omega) \cdot \hat{V}_x^m(\omega)$$

$$\hat{V}_y(\omega) = \Gamma_y(\omega) \cdot K(\omega) \cdot \hat{V}_y^m(\omega)$$

$$\hat{V}_z(\omega) = \Gamma_z(\omega) \cdot K(\omega) \cdot \hat{V}_z^m(\omega)$$

- calcul (104) d'une première impédance vectorielle complexe $\hat{Z}1(\omega_n)$, présentant des composantes spatiales réelles $R1_{x,y,z}(\omega_n)$ et des composantes spatiales imaginaires $X1_{x,y,z}(\omega_n)$, selon les équations :

$$\hat{Z}1_x(\omega_n) = \frac{\hat{P}(\omega_n) \cdot \hat{V}_x(\omega_n)}{\hat{V}_x(\omega_n) \cdot \hat{V}_x(\omega_n)}$$

$$\hat{Z}1_y(\omega_n) = \frac{\hat{P}(\omega_n) \cdot \hat{V}_y(\omega_n)}{\hat{V}_y(\omega_n) \cdot \hat{V}_y(\omega_n)}$$

$$\hat{Z}1_z(\omega_n) = \frac{\hat{P}(\omega_n) \cdot \hat{V}_z(\omega_n)}{\hat{V}_z(\omega_n) \cdot \hat{V}_z(\omega_n)} ;$$

- calcul (107) d'une seconde impédance vectorielle complexe $\hat{Z}2(\omega_n)$, présentant des composantes spatiales réelles $R2_{x,y,z}(\omega_n)$ et des composantes spatiales imaginaires $X2_{x,y,z}(\omega_n)$, selon les équations :

$$\hat{Z}2_x(\omega_n) = \frac{\hat{P}(\omega_n) \cdot \hat{P}(\omega_n)}{\hat{P}(\omega_n) \cdot \hat{V}_x(\omega_n)}$$

$$\hat{Z}2_y(\omega_n) = \frac{\hat{P}(\omega_n) \cdot \hat{P}(\omega_n)}{\hat{P}(\omega_n) \cdot \hat{V}_y(\omega_n)}$$

$$\hat{Z}2_z(\omega_n) = \frac{\hat{P}(\omega_n) \cdot \hat{P}(\omega_n)}{\hat{P}(\omega_n) \cdot \hat{V}_z(\omega_n)} ;$$

- calcul (110) de spectres de puissance des composantes de vitesse :

$$\left| \hat{V}_x \right|^2 (\omega_n) = \hat{V}_x \hat{V}_x^*$$

$$\left|\hat{V}_y\right|^2(\omega_n) = \hat{V}_y\,\hat{V}_y^*$$

$$\left|\hat{V}_z\right|^2(\omega_n) = \hat{V}_z\,\hat{V}_z^*$$

où $\hat{V}_x^*$, $\hat{V}_y^*$, $\hat{V}_z^*$ sont des spectres conjugués complexes des composantes de vitesse $\hat{V}_x$, $\hat{V}_y$, $\hat{V}_z$ ;

- calcul (111) d'une distribution de fréquence d'une première intensité active $\vec{I}1(\omega_n)$ selon les équations :

$$\vec{I}1(\omega_n) = (R1_x\left|\hat{V}_x\right|^2(\omega_n), R1_y\left|\hat{V}_y\right|^2(\omega_n), R1_z\left|\hat{V}_z\right|^2(\omega_n));$$

- calcul (112) d'une distribution de fréquence d'une seconde intensité active $\overline{\vec{I}2(\omega_n)}$ selon les équations :

$$\vec{I}2(\omega_n) = (R2_x\left|\hat{V}_x\right|^2(\omega_n), R2_y\left|\hat{V}_y\right|^2(\omega_n), R2_z\left|\hat{V}_z\right|^2(\omega_n));$$

- détermination (115) d'une intensité acoustique active $\vec{I}(\omega_n)$ et d'une première incertitude relative $\varepsilon_i(\omega_n)$: avec i=(x, y, z), selon les équations suivantes :

$$\vec{I}(\omega_n) = \frac{\vec{I}1(\omega_n) + \vec{I}2(\omega_n)}{2}$$

$$\varepsilon_i(\omega_n) = \frac{\left|I1_i(\omega_n) - I2_i(\omega_n)\right|}{I_i(\omega_n)}$$

- calcul (113b) d'une distribution de fréquence de composants $[\mathbb{Q}1^2(\omega n)]_{ij}$ , avec i=(x, y, z), et j=(x, y, z), d'un premier tenseur de réactivité quadratique $\mathbb{Q}1^2(\omega n)$ , selon l'équation :

$$[\mathbb{Q}1^2(\omega n)]_{ij} = X1_i(\omega n)\left|\hat{V}_i\right|^2(\omega n) \cdot X1_j(\omega n)\left|\hat{V}_j\right|^2(\omega n);$$

- calcul (114b) d'une distribution de fréquence de composants $[\mathbb{Q}2^2(\omega n)]_{ij}$ , avec i=(x, y, z), et j=(x, y, z), d'un second tenseur de réactivité quadratique $\mathbb{Q}2^2(\omega n)$ , selon l'équation :

$$[\mathbb{Q}2^2(\omega n)]_{ij} = X2_i(\omega n)\left|\hat{V}_i\right|^2(\omega n) \cdot X2_j(\omega n)\left|\hat{V}_j\right|^2(\omega n) ;$$

- détermination (116b) d'un tenseur moyen de réactivité $\mathbb{Q}(\omega n)$ et d'une troisième incertitude relative $\varepsilon_b$ selon les équations suivantes :

$$\mathbb{Q}(\omega n) = \frac{\sqrt{\mathbb{Q}1^2(\omega n)} + \sqrt{\mathbb{Q}2^2(\omega n)}}{2}$$

$$\varepsilon_b(\omega n) = \frac{\left\|\sqrt{\mathbb{Q}1^2(\omega n)} - \sqrt{\mathbb{Q}2^2(\omega n)}\right\|}{\|\mathbb{Q}(\omega n)\|}.$$

3. Procédé selon la revendication 1 ou 2, dans lequel l'étape de calcul (110) des spectres de puissance des composantes de vitesse comprend le calcul du spectre de puissance de pression :

$$\left|\hat{P}\right|^2(\omega_n) = \hat{P}\hat{P}^*$$

où $\hat{P}^*$ est un spectre conjugué complexe de pression $\hat{P}$.

4. Procédé selon l'une quelconque des revendications précédentes, dans lequel les fonctions de calibration K($\omega$) et $\hat{\Gamma}(\omega) \equiv (\hat{\Gamma}_x(\omega), \hat{\Gamma}_y(\omega), \hat{\Gamma}_y(\omega))$ sont connues a priori, c'est-à-dire qu'elles sont fournies par les fabricants de sondes de vélocimétrie ou de microphone, ou elles sont obtenues par des méthodes connues dans la littérature.

5. Procédé selon l'une quelconque des revendications précédentes, comprenant une étape (117) d'addition des composantes spectrales de l'intensité acoustique active $\vec{I}(\omega_n)$ sur toutes les fréquences $\omega$n obtenant un vecteur d'intensité active $\vec{I}$, selon l'équation $\vec{I} = \sum_{n=1}^{N/2} \vec{I}(\omega_n)$, où N/2 est un nombre de raies spectrales.

6. Procédé selon la revendication 5, comprenant une étape (118) de détermination d'une grandeur de l'intensité active $I$ par calcul d'une norme du vecteur d'intensité active $\vec{I}$.

7. Procédé selon la revendication 3 ou l'une quelconque des revendications 4 à 6 lorsqu'elle dépend de la revendication 3, comprenant une étape (119) de calcul d'une intensité apparente J selon l'équation

$$J = \sum_{n=1}^{N/2}\left|\hat{P}\right|^2(\omega_n) \cdot \sum_{n=1}^{N/2}\left(\left|\hat{V}_x\right|^2(\omega_n) + \left|\hat{V}_y\right|^2(\omega_n) + \left|\hat{V}_z\right|^2(\omega_n)\right).$$

8. Procédé selon les revendications 6 et 7, comprenant une étape (120) de détermination d'une grandeur Q de l'intensité réactive selon l'équation $Q = \sqrt{J^2 - I^2}$.

9. Procédé selon l'une quelconque des revendications 5 à 8 lorsqu'elle dépend de la revendication 2, comprenant en outre les étapes suivantes :

 - normalisation (124) du vecteur d'intensité active $\vec{I}$ obtenant une orientation $\vec{T} = \frac{\vec{I}}{|\vec{I}|}$, et
 - calcul (125) d'une distribution de fréquence d'un vecteur d'intensité réactive $\vec{Q}_T(\omega_n)$ dans la direction de l'intensité active $\vec{I}$, projection du tenseur moyen de réactivité $Q(\omega n)$ dans la direction $\vec{T}$ de l'intensité active $\vec{I}$ selon l'équation :

$$\vec{Q}_T = \mathbb{Q}(\omega n) \cdot \vec{T}$$

10. Procédé selon l'une quelconque des revendications précédentes 3 à 9, comprenant en outre un algorithme d'auto-étalonnage comprenant les étapes de :

 - calcul (121) d'une fonction d'étalonnage $\hat{\Gamma}_m(\omega_n)$ telle que

$$\Gamma_m(\omega_n) = \left[ \frac{Z_x(\omega_n) \cdot I_x}{\sum_{n=1}^{N/2} |P(\omega_n)|^2}, \quad \frac{Z_y(\omega_n) \cdot I_y}{\sum_{n=1}^{N/2} |P(\omega_n)|^2}, \quad \frac{Z_z(\omega_n) \cdot I_z}{\sum_{n=1}^{N/2} |P(\omega_n)|^2} \right]$$

où m correspond à l'itération m-ième de l'algorithme, l'impédance $Z(\omega)$ est choisie entre les première et deuxième impédances Z1, Z2 respectivement, et Ix, Iy, Iz, sont les composantes de l'intensité active $\vec{I}(\omega_n)$ ;

- nouvelle mise en œuvre du procédé à partir de l'étape de calibrage (103) ;
- calcul (122) de composantes d'un indicateur résiduel $L_{m,m-1}$ indiquant une différence entre les spectres de l'intensité active $\vec{I_m}(\omega_n)$ et les spectres de l'intensité active $\vec{I_{m-1}}(\omega_n)$ obtenus à l'itération précédente, c'est-à-dire $L_{m,m-1} = L_{m,m-1} (\vec{I_m}(\omega_n), \vec{I_{m-1}}(\omega_n))$ ;
- vérification (123) du fait que l'indicateur résiduel $L_{m,\,m-1}$ est supérieur à un seuil prédéterminé $\delta = (\delta_x,\ \delta_y,\ \delta_z)$ de sorte que :

  si l'indicateur résiduel $L_{m,\,m-1}$ est supérieur au seuil prédéterminé $\delta$, une nouvelle fonction $\hat{\Gamma}_{m+1}(\omega_n)$ est calculée (121) et le procédé est à nouveau mis en œuvre à partir de l'étape de calibrage (103), alternativement
  si l'indicateur résiduel $L_{m,\,m-1}$ est inférieur ou égal au seuil prédéterminé $\delta$, le procédé se termine.

**11.** Procédé selon la revendication 10, dans lequel l'indicateur résiduel peut indiquer la différence entre l'intensité active $I_m$, sur toute la bande de fréquence mesurée et l'intensité active $I_{m-1}$ sur toute la bande de fréquence mesurée obtenue à partir de l'itération précédente, c'est-à-dire $L_{m,\,m-1} = L_{m,\,m-1} (I_m, I_{m-1})$, et le seuil prédéterminé $\delta$ est un scalaire.

**12.** Appareil (10) configuré pour mettre en œuvre le procédé de détermination de l'intensité acoustique active et réactive selon l'une quelconque des revendications 1 à 11, comprenant un dispositif (15) comprenant des sondes de vélocimétrie (1, 2, 3) et des sondes de microphone (4) pour détecter directement une vitesse acoustique dans trois directions orthogonales entre elles et une pression acoustique, un convertisseur A/N (16) couplé au dispositif (15) pour recevoir des signaux temporels de vitesse et de pression et pour les envoyer sous forme discrétisée à un processeur (17) configuré pour exécuter le procédé de détermination de l'intensité acoustique active et réactive selon l'une quelconque des revendications 1 à 11.

**13.** Appareil (10) selon la revendication 12, dans lequel le processeur (17) est connecté à un ou plusieurs écrans (18).

*Fig. 1*

*Fig. 2*

Fourier Transform

$$\hat{P}^n(\omega_k) = FFT(p(n))$$

$$\hat{V}_x^n(\omega_k) = FFT(v_x(n))$$

$$\hat{V}_y^n(\omega_k) = FFT(v_y(n))$$

$$\hat{V}_z^n(\omega_k) = FFT(v_z(n))$$

102

$$\hat{P}^n(\omega_k)$$

$$\hat{V}_x^n(\omega_k)$$

$$\hat{V}_y^n(\omega_k)$$

$$\hat{V}_z^n(\omega_k)$$

$$p(n)$$

$$v_x(n)$$

$$v_y(n)$$

$$v_z(n)$$

*Fig. 3*

Spectrum Calibrator

$$\hat{P}(\omega) = K(\omega) \cdot \hat{P}^m(\omega)$$

$$\hat{V}_x(\omega) = \Gamma_x(\omega) \cdot K(\omega) \cdot \hat{V}_x^m(\omega)$$

$$\hat{V}_y(\omega) = \Gamma_y(\omega) \cdot K(\omega) \cdot \hat{V}_y^m(\omega)$$

$$\hat{V}_z(\omega) = \Gamma_z(\omega) \cdot K(\omega) \cdot \hat{V}_z^m(\omega)$$

$\hat{P}(\omega_k)$  $\hat{V}_x(\omega_k)$  $\hat{V}_y(\omega_k)$  $\hat{V}_z(\omega_k)$

$\hat{P}^m(\omega_k)$  $\hat{V}_x^m(\omega_k)$  $\hat{V}_y^m(\omega_k)$  $\hat{V}_z^m(\omega_k)$

$K(\omega)$

$$\begin{bmatrix} \Gamma_x(\omega) \\ \Gamma_y(\omega) \\ \Gamma_z(\omega) \end{bmatrix}$$

103

*Fig. 4*

*Fig. 5*

*Fig. 6*

36

115

$$\vec{I}(\omega_n) = \frac{\vec{I1}(\omega_n) + \vec{I2}(\omega_n)}{2}$$

$$\varepsilon_i(\omega_n) = \frac{\left| I1_i(\omega_n) - I2_i(\omega_n) \right|}{I_i(\omega_n)}$$

**Fig. 7a**

116a

$$Q(\omega_n) = \frac{Q1(\omega_n) + Q2(\omega_n)}{2}$$

$$\varepsilon(\omega_n) = \frac{\left| Q1(\omega_n) - Q2(\omega_n) \right|}{Q(\omega_n)}$$

**Fig. 7b**

100

101 A/D

102 Fourier Transform

103 Spectrum Calibrator

K pressure correction

$\Gamma$ velocity correction

104 3D Impedance Calculator 1
$Z1(\omega_n) = \dfrac{G_{px}(\omega_n)}{G_{vx}(\omega_n)}$

110 Power Spectrum Calculator

107 3D Impedance Calculator 2
$Z2(\omega_n) = \dfrac{G_{px}(\omega_n)}{G_{vy}(\omega_n)}$

111 Frequency Distribution of 3D Active Intensity from Impedance
$\vec{I}1(\omega_n) = (R1_x|\vec{V}_x|^2(\omega_n), R1_y|\vec{V}_y|^2(\omega_n), R1_z|\vec{V}_z|^2(\omega_n))$

113b Frequency Distribution of Square Reactivity Tensor from Impedance
$[\mathbb{Q}1^2(\omega_n)]_{ij} = X1_i(\omega_n)|\vec{V}_i|^2(\omega_n) \cdot X1_j(\omega_n)|\vec{V}_j|^2(\omega_n)$

119 Apparent Intensity
$J = \sum_{n=1}^{N/2}|\vec{P}|^2(\omega_n) \cdot \sum_{n=1}^{N/2}\left(|\vec{V}_x|^2(\omega_n)+|\vec{V}_y|^2(\omega_n)+|\vec{V}_z|^2(\omega_n)\right)$

112 Frequency Distribution of 3D Active Intensity from Impedance
$\vec{I}2(\omega_n) = (R2_x|\vec{V}_x|^2(\omega_n), R2_y|\vec{V}_y|^2(\omega_n), R2_z|\vec{V}_z|^2(\omega_n))$

114b Frequency Distribution of Square Reactivity Tensor from Impedance
$[\mathbb{Q}2^2(\omega_n)]_{ij} = X2_i(\omega_n)|\vec{V}_i|^2(\omega_n) \cdot X2_j(\omega_n)|\vec{V}_j|^2(\omega_n)$

121
$\Gamma_2(\omega_n) = \left[ \dfrac{Z_x(\omega_n)\cdot I_x}{\sum_{n=1}^{N/2}|P(\omega_n)|^2}, \dfrac{Z_y(\omega_n)\cdot I_y}{\sum_{n=1}^{N/2}|P(\omega_n)|^2}, \dfrac{Z_z(\omega_n)\cdot I_z}{\sum_{n=1}^{N/2}|P(\omega_n)|^2} \right]$

115 $\vec{I}1(\omega_n)$  115a

117 $\sum_{n=1}^{N/2}$  117a  118  118a

$\mathbb{Q}1^2(\omega_n)$  119a  120  120a

$J^2$

$\vec{I}2(\omega_n)$

$\mathbb{Q}2^2(\omega_n)$  116b

124  $\vec{T} \triangleq \dfrac{\vec{I}}{|\vec{I}|}$

125 Frequency Distribution of Reactive Intensity
$\vec{Q}_T = \mathbb{Q}(\omega_n)\cdot\vec{T}$  125'

-------- Single signal (SS)
======== Spacial vector (SV)
======== Spacial vector + SS
======== Matrix 3x3

**Fig. 8**

38

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4463453 A
- WO 9600488 A
- WO 9935470 A

**Non-patent literature cited in the description**

- A note on the relation between complex acoustic intensity and specific acoustic impedance. **PRASAD M G ; HAM S Y.** JOURNAL OF SOUND AND VIBRATION. ELSEVIER, 1987, vol. 118, 549-554

- **STANZIAL D. ; GRAFFIGNA C. AND.** Protocollo di calibrazione in ampiezza and step per probes pressure-velocity in un campo di riferimento a onde piane progressive. *Associazione Italiana di Acustica, 44° Convegno Nazionale, Pavia,* 07 June 2017, ISBN 978-88-88942-54-4